# EUROPEAN PATENT APPLICATION

(11) **EP 4 568 342 A1**
(43) Date of publication of application: **11.06.2025**
(21) Application number: 23849978.4
(22) Date of filing: 26.07.2023
(51) Int. Cl.: H04W 28/24, H04W 28/02, H04W 36/00, H04W 72/1268, H04W 72/566

(54) **COMMUNICATION SYSTEM**

(30) Priority: 03.08.2022 JP 2022123847
(71) Applicant: MITSUBISHI ELECTRIC CORPORATION, Chiyoda-ku Tokyo 100-8310 (JP)
(72) Inventor: MOCHIZUKI, Mitsuru, Tokyo 100-8310 (JP); SHIMODA, Tadahiro, Tokyo 100-8310 (JP)
(74) Representative: Mewburn Ellis LLP
(86) International application number: PCT/JP2023/027376
(87) International publication number: WO 2024/029423

(57) **Abstract**

A communication system includes a base station apparatus connected to a core network that is compatible with a fifth generation radio access system and is capable of providing an XR service, and a communication terminal connected to the base station apparatus in which, in a case in which the communication terminal uses the XR service via the base station apparatus, the communication terminal is configured to notify the base station apparatus of information on a characteristic of uplink data to be transmitted to the base station apparatus in communication for using the XR service.

## Description

### Technical Field

The present disclosure relates to a radio communication technology.

### Background

In the 3rd Generation Partnership Project (3GPP) being a standard organization of mobile communication systems, a fifth generation (which may be hereinafter referred to as "5G") radio access system is studied (for example, NPL 2) as a successor to Long Term Evolution (LTE) and Long Term Evolution Advanced (LTE-A) being one of fourth generation radio access systems (see NPL 1). A technology of 5G radio sections is referred to as "New Radio Access Technology" ("New Radio" is abbreviated to "NR"). An NR system has been studied, based on an LTE system and the LTE-A system.

For example, in Europe, requirements for 5G are summarized in an organization named METIS (see NPL 3). The 5G radio access system is required to implement lower power consumption and lower apparatus costs, making its system capacity 1000 times as high as, data transmission rate 100 times as high as, data processing delay one fifth (1/5) of, and number of simultaneously connected communication terminals 100 times as large as those of the LTE system (see NPL 3).

To satisfy these requirements, in 3GPP, standardization of 5G has been studied (see NPLs 4 to 23).

As NR access schemes, orthogonal frequency division multiplexing (OFDM) is used in a downlink direction, and OFDM and discrete Fourier transform-spread-OFDM (DFT-s-OFDM) are used in an uplink direction. As with LTE and LTE-A, the 5G system employs only a packet communication method, without including circuit switching.

In NR, frequencies higher than those in LTE are available in order to enhance the transmission rate and reduce the processing delay.

In NR in which frequencies higher than those in LTE may be used, cell coverage is secured by forming a narrow beam-like transmission and reception range (beamforming) and changing directions of beams (beam sweeping).

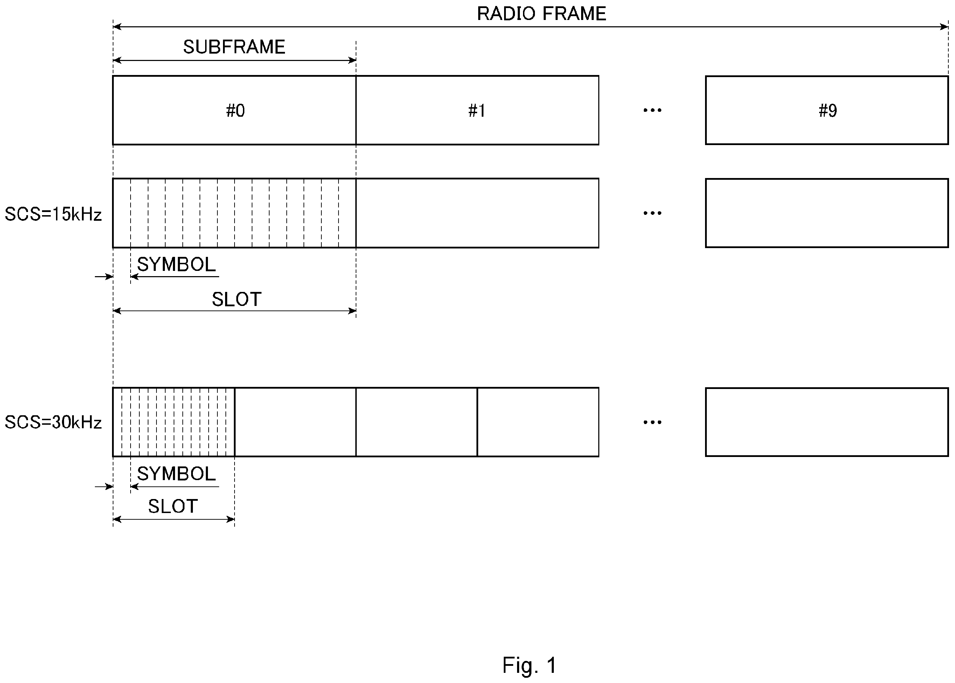

Decisions on a frame configuration in the NR system in 3GPP described in NPL 1 (Section 5) will be described with reference to Fig. 1. Fig. 1 is an explanatory diagram illustrating a configuration of radio frames used in an NR communication system. In Fig. 1, one radio frame has 10 ms. The radio frame is divided into 10 subframes having equal sizes. The frame configuration in NR supports one or a plurality of numerologies, in other words, one or a plurality of subcarrier spacings (SCSs). In NR, one subframe includes 1 ms and one slot includes 14 symbols, regardless of the subcarrier spacing. The number of slots included in one subframe is one with the subcarrier spacing of 15 kHz, and the number of slots with other subcarrier spacings increases in proportion to the subcarrier spacing (see NPL 11 (3GPP TS 38.211)).

Decisions on a channel configuration in the NR system in 3GPP are described in NPL 2 (Section 5) and NPL 11.

A physical broadcast channel (PBCH) is a downlink transmission channel from a base station apparatus (which may be hereinafter simply referred to as a "base station") to a communication terminal apparatus (which may be hereinafter referred to as a "communication terminal" or a "terminal") such as a mobile terminal apparatus (which may be hereinafter simply referred to as a "mobile terminal"). The PBCH is transmitted together with a downlink synchronization signal.

The downlink synchronization signal in NR includes a primary synchronization signal (P-SS) and a secondary synchronization signal (S-SS). The synchronization signal is transmitted as a synchronization signal burst (which may be hereinafter referred to as an SS burst) from the base station with a predetermined period for predetermined duration. The SS burst includes a synchronization signal block (which may be hereinafter referred to as an SS block) of each beam of the base station.

The base station transmits, by changing the beams, the SS block of each beam within the duration of the SS burst. The SS block includes the P-SS, the S-SS, and the PBCH.

A physical downlink control channel (PDCCH) is a downlink transmission channel from the base station to the communication terminal. The PDCCH carries downlink control information (DCI). The DCI includes resource allocation information of a downlink shared channel (DL-SCH) being one of transport channels to be described below, resource allocation information of a paging channel (PCH) being one of transport channels to be described below, hybrid automatic repeat request (HARQ) information on the DL-SCH, and the like. The DCI may include an uplink scheduling grant. The DCI may include an acknowledgement (Ack)/negative acknowledgement (Nack) being a response signal for uplink transmission. For flexible switching of DL/UL in the slot, the DCI may include a slot format indication (SFI). The PDCCH or the DCI is also referred to as an L1/L2 control signal.

In NR, a time/frequency domain as candidates including the PDCCH is provided. The domain is referred to as a control resource set (CORESET). The communication terminal monitors the CORESET and acquires the PDCCH.

A physical downlink shared channel (PDSCH) is a downlink transmission channel from the base station to the communication terminal. To the PDSCH, a downlink shared channel (DL-SCH) being a transport channel and a PCH being a transport channel are mapped.

A physical uplink control channel (PUCCH) is an uplink transmission channel from the communication terminal to the base station. The PUCCH carries uplink control information (UCI). The UCI includes an Ack/Nack being a response signal for downlink transmission, channel state information (CSI), a scheduling request (SR), and the like. The CSI includes a rank indicator (RI), a precoding matrix indicator (PMI), and a channel quality indicator (CQI) report. The RI is rank information of a channel matrix in Multiple Input Multiple Output (MIMO). The PMI is information of a precoding weight matrix used in MIMO. The CQI is quality information indicating received data quality or communication path quality. The UCI may be carried on a PUSCH to be described below. The PUCCH or the UCI is also referred to as an L1/L2 control signal.

A physical uplink shared channel (PUSCH) is an uplink transmission channel from the communication terminal to the base station. To the PUSCH, an uplink shared channel (UL-SCH) being one of transport channels is mapped.

A physical random access channel (PRACH) is an uplink transmission channel from the communication terminal to the base station. The PRACH carries a random access preamble.

A downlink reference signal (RS) is known symbols in the NR communication system. The following four types of downlink reference signals are defined. They are a data demodulation reference signal (DM-RS) being a UE-specific reference signal, a phase tracking reference signal (PT-RS), a positioning reference signal (PRS), and a channel state information reference signal (CSI-RS). Measurement of a physical layer of the communication terminal includes reference signal received power (RSRP) measurement and reference signal received quality (RSRQ) measurement.

An uplink reference signal is also similarly known symbols in the NR communication system. The following three types of uplink reference signals are defined. They are a data demodulation reference signal (DM-RS), a phase tracking reference signal (PT-RS), and a sounding reference signal (SRS).

Transport channels described in NPL 2 (Section 5) will be described. A broadcast channel (BCH), among downlink transport channels, is broadcast to the entire coverage of the base station (cell). The BCH is mapped to the physical broadcast channel (PBCH).

HARQ retransmission control is applied to the downlink shared channel (DL-SCH). The DL-SCH can be broadcast to the entire coverage of the base station (cell). The DL-SCH supports dynamic or semi-static resource allocation. The semi-static resource allocation is also referred to as semi-persistent scheduling. The DL-SCH supports discontinuous reception (DRX) of the communication terminal in order to implement low power consumption of the communication terminal. The DL-SCH is mapped to the physical downlink shared channel (PDSCH).

The paging channel (PCH) supports DRX of the communication terminal in order to enable low power consumption of the communication terminal. The PCH is required to be broadcast to the entire coverage of the base station (cell). The PCH is mapped to physical resources that can be dynamically used for traffic, such as the physical downlink shared channel (PDSCH).

HARQ retransmission control is applied to the uplink shared channel (UL-SCH) among uplink transport channels. The UL-SCH supports dynamic or semi-static resource allocation. The semi-static resource allocation is also referred to as a configured grant. The UL-SCH is mapped to the physical uplink shared channel (PUSCH).

A random access channel (RACH) is limited to control information. The RACH has a risk of collision. The RACH is mapped to the physical random access channel (PRACH).

HARQ will be described. HARQ is a technology for enhancing communication quality of a transmission path, using a combination of an automatic repeat request (ARQ) and error correction (forward error correction). HARQ has an advantage in that, owing to retransmission, error correction effectively functions even for a transmission path with varying communication quality. Particularly, in retransmission, it is also possible to further enhance quality by combining reception results of first transmission and reception results of retransmission.

An example of a method of retransmission will be described. In a case in which a receiver fails to correctly decode received data, in other words, a cyclic redundancy check (CRC) error occurs in the receiver (CRC = NG), a "Nack" is transmitted from the receiver to a transmitter. The transmitter that has received the "Nack" retransmits data. In a case in which the receiver successfully correctly decodes received data, in other words, a CRC error does not occur in the receiver (CRC = OK), an "Ack" is transmitted from the receiver to the transmitter. The transmitter that has received the "Ack" transmits subsequent data.

Another example of a method of retransmission will be described. In a case in which a CRC error occurs in the receiver, a retransmission request is performed from the receiver to the transmitter. The retransmission request is performed using toggling of a new data indicator (NDI). The transmitter that has received the retransmission request retransmits data. In a case in which a CRC error does not occur in the receiver, the retransmission request is not performed. In a case in which the transmitter does not receive the retransmission request for a predetermined time, the transmitter considers that no CRC error has occurred in the receiver.

Logical channels described in NPL 1 (Section 6) will be described. A broadcast control channel (BCCH) is a downlink channel for broadcasting system control information. The BCCH being a logical channel is mapped to the broadcast channel (BCH) or the downlink shared channel (DL-SCH) being transport channels.

A paging control channel (PCCH) is a downlink channel for transmitting paging information and system information change. The PCCH being a logical channel is mapped to the paging channel (PCH) being a transport channel.

A common control channel (CCCH) is a channel for transmitting control information between the communication terminal and the base station. The CCCH is used in a case in which the communication terminal does not have RRC connection with the network. In the downlink direction, the CCCH is mapped to the downlink shared channel (DL-SCH) being a transport channel. In the uplink direction, the CCCH is mapped to the uplink shared channel (UL-SCH) being a transport channel.

A dedicated control channel (DCCH) is a channel for transmitting dedicated control information between the communication terminal and the network on a one-to-one basis. The DCCH is used in a case in which the communication terminal has RRC connection with the network. The DCCH is mapped to the uplink shared channel (UL-SCH) in the uplink, and is mapped to the downlink shared channel (DL-SCH) in the downlink.

A dedicated traffic channel (DTCH) is a channel for one-to-one communication to the communication terminal for transmission of user information. The DTCH is present in both of the uplink and the downlink. The DTCH is mapped to the uplink shared channel (UL-SCH) in the uplink, and is mapped to the downlink shared channel (DL-SCH) in the downlink.

Location tracking of the communication terminal is performed in a unit of an area consisting of one or more cells. Location tracking is performed to enable tracking the location of the communication terminal even in an idle state, and enable calling the communication terminal, in other words, enable the communication terminal to receive a call. The area for location tracking of the communication terminal is referred to as a tracking area (TA).

NR supports calling the communication terminal in a range in a unit of an area smaller than the tracking area. The range is referred to as a RAN notification area (RNA). Paging of the communication terminal in an RRC_INACTIVE state to be described below is performed in the range.

In NR, carrier aggregation (CA) is studied, in which two or more component carriers (CCs) are aggregated to support wide frequency bandwidths (transmission bandwidths). CA is described in NPL 1.

In a case in which CA is configured, the UE being a communication terminal has a single RRC connection with the network (NW). In RRC connection, one serving cell provides NAS mobility information and security input. The cell is referred to as a primary cell (PCell). A secondary cell (SCell) is configured to form a group of serving cells with the PCell, according to a UE capability. The group of serving cells consisting of one PCell and one or more SCells is configured for one UE.

3GPP has dual connectivity (abbreviated to DC) or the like in which the UE connects to two base stations and perform communication, in order to further increase communication capacity. DC is described in NPLs 1 and 22.

One of the base stations performing dual connectivity (DC) may be referred to as a "master base station (master node (MN))", and the other may be referred to as a "secondary base station (secondary node (SN))". The serving cells configured by the master base station may be collectively referred to as a master cell group (MCG), and the serving cells configured by the secondary base station may be collectively referred to as a secondary cell group (SCG). In DC, a primary cell in the MCG or the SCG is referred to as a special cell (SpCell or SPCell). The special cell in the MCG is referred to as a PCell, and the special cell in the SCG is referred to as a primary SCG cell (PSCell).

In NR, the base station configures a part of the carrier frequency band (the part may be hereinafter referred to as a bandwidth part (BWP)) for the UE in advance, and the UE performs transmission and reception to and from the base station in the BWP, to thereby reduce power consumption in the UE.

In 3GPP, support of services (which may be applications) using sidelink (SL) communication (also referred to as PC5 communication) both in an Evolved Packet System (EPS) and a 5G core system to be described below is studied (see NPLs 1, 2, and 26 to 28). In SL communication, communication is performed between the terminals. Examples of the services using SL communication include a vehicle-to-everything (V2X) service, a proximity-based service, and the like. The SL communication proposes not only direct communication between the terminals but also communication between the UE and the NW via relay (see NPLs 26 and 28).

Physical channels used in the SL (see NPLs 2 and 11) will be described. A physical sidelink broadcast channel (PSBCH) carries information on a system and synchronization, and is transmitted from the UE.

A physical sidelink control channel (PSCCH) carries control information from the UE for sidelink communication and V2X sidelink communication.

A physical sidelink shared channel (PSSCH) carries data from the UE for sidelink communication and V2X sidelink communication.

A physical sidelink feedback channel (PSFCH) carries sidelink HARQ feedback from the UE that has received PSSCH transmission to the UE that has transmitted the PSSCH.

Transport channels used in the SL (see NPL 1) will be described. A sidelink broadcast channel (SL-BCH) has a predetermined transport format, and is mapped to the PSBCH being a physical channel.

A sidelink shared channel (SL-SCH) supports broadcast transmission. The SL-SCH supports both of UE autonomous resource selection and resource allocation scheduled by the base station. UE autonomous resource selection has a risk of collision, and in a case in which dedicated resources are allocated to the UE by the base station, there is no collision. The SL-SCH supports dynamic link adaptation by changing transmit power, modulation, and coding. The SL-SCH is mapped to the PSSCH being a physical channel.

Logical channels used in the SL (see NPL 2) will be described. A sidelink broadcast control channel (SBCCH) is a sidelink channel for broadcasting sidelink system information from one UE to another UE. The SBCCH is mapped to the SL-BCH being a transport channel.

A sidelink traffic channel (STCH) is a one-to-many sidelink traffic channel for transmitting user information from one UE to another UE. The STCH is used only by the UE having a sidelink communication capability and the UE having a V2X sidelink communication capability. One-to-one communication between the UEs having two sidelink communication capabilities is also implemented on the STCH. The STCH is mapped to the SL-SCH being a transport channel.

A sidelink control channel (SCCH) is a sidelink control channel for transmitting control information from one UE to another UE. The SCCH is mapped to the SL-SCH being a transport channel.

In LTE, only broadcast is supported in the SL communication. In NR, support of unicast and groupcast in addition to broadcast in the SL communication is studied (see NPL 27 (3GPP TS 23.287)).

In SL unicast communication and groupcast communication, HARQ feedback (Ack/Nack), a CSI report, and the like are supported.

In 3GPP, an integrated access and backhaul (IAB) is studied, in which both of an access link being a link between the UE and the base station and a backhaul link being a link between the base stations are performed wirelessly (see NPLs 2, 20, and 29).

In 3GPP, some new technologies are proposed. For example, a communication method suited to extended reality (XR) and cloud gaming services is discussed (NPL 30), and an XR recognition method, an XR-specific power consumption reduction method, an XR-specific capacity enhancement method, and the like taking account of characteristics of XR traffic (for example, non-integer periodicity, data generation time variation (jitter) characteristics, data volume variation characteristics, low latency characteristics, and the like) are proposed (NPLs 31, 32, and 33).

### Citation List

### Non Patent Literature

[NPL 1] 3GPP TS 36.300 V16.7.0
[NPL 2] 3GPP TS 38.300 V16.8.0
[NPL 3] "Scenarios, requirements and KPIs for 5G mobile and wireless system", ICT-317669-METIS/D1.1
[NPL 4] 3GPP TR 23.799 V14.0.0
[NPL 5] 3GPP TR 38.801 V14.0.0
[NPL 6] 3GPP TR 38.802 V14.2.0
[NPL 7] 3GPP TR 38.804 V14.0.0
[NPL 8] 3GPP TR 38.912 V16.0.0
[NPL 9] 3GPP RP-172115
[NPL 10] 3GPP TS 23.501 V17.3.0
[NPL 11] 3GPP TS 38.211 V17.0.0
[NPL 12] 3GPP TS 38.212 V17.0.0
[NPL 13] 3GPP TS 38.213 V17.0.0
[NPL 14] 3GPP TS 38.214 V17.0.0
[NPL 15] 3GPP TS 38.321 V16.7.0
[NPL 16] 3GPP TS 38.322 V16.2.0
[NPL 17] 3GPP TS 38.323 V16.6.0
[NPL 18] 3GPP TS 37.324 V16.3.0
[NPL 19] 3GPP TS 38.331 V16.7.0
[NPL 20] 3GPP TS 38.401 V16.8.0
[NPL 21] 3GPP TS 38.413 V16.8.0
[NPL 22] 3GPP TS 37.340 V16.8.0
[NPL 23] 3GPP TS 38.423 V16.8.0
[NPL 24] 3GPP TS 38.305 V16.7.0
[NPL 25] 3GPP TS 23.273 V17.3.0
[NPL 26] 3GPP TR 23.703 V12.0.0
[NPL 27] 3GPP TS 23.287 V17.2.0
[NPL 28] 3GPP TS 23.303 V17.0.0
[NPL 29] 3GPP TS 38.340 V16.5.0
[NPL 30] 3GPP RP-213587
[NPL 31] 3GPP R1-2204656
[NPL 32] 3GPP R1-2203132
[NPL 33] 3GPP R1-2205056
[NPL 34] 3GPP TR 38.838 V17.0.0

### SUMMARY

### Technical Problem

In the 5G radio access system, communication for various services is performed. Enabling communication suited to XR and cloud gaming services is also an important problem. To enable such communication, a communication method taking account of characteristics of XR traffic (for example, non-integer periodicity, data generation time variation (jitter) characteristics, data volume variation characteristics, low latency characteristics, and the like) is required (NPL 30). In a conventional communication method, an NW side does not have means to recognize such characteristics of data generated in a UE side. Accordingly, there is a problem that the conventional communication method is unsuited to the characteristics of XR traffic to thereby cause increase in delay time and deterioration in communication quality.

In view of the problem, the present disclosure has one object to implement a communication system suited to communication having a characteristic such as XR traffic. Solution to Problem

A communication system according to the present disclosure includes a base station apparatus connected to a core network that is compatible with a fifth generation radio access system and is capable of providing an XR service, and a communication terminal connected to the base station apparatus. In a case in which the communication terminal uses the XR service via the base station apparatus, the communication terminal is configured to notify the base station apparatus of information on a characteristic of uplink data to be transmitted to the base station apparatus in communication for using the XR service.

### Advantageous Effects of Invention

According to the present disclosure, a communication system suited to communication having a characteristic such as XR traffic can be implemented.

The objects, features, aspects and advantages of the present disclosure will become more apparent from the following detailed description and the accompanying drawings.

### BRIEF DESCRIPTION OF THE DRAWINGS

Fig. 1 is an explanatory diagram illustrating a configuration of radio frames used in an NR communication system;
Fig. 2 is a block diagram illustrating an overall configuration of an NR communication system 210 discussed in 3GPP;
Fig. 3 is a configuration diagram of DC performed by base stations to connect to an NG core;
Fig. 4 is a block diagram illustrating a configuration of a mobile terminal 202 illustrated in Fig. 2;
Fig. 5 is a block diagram illustrating a configuration of a base station 213 illustrated in Fig. 2;
Fig. 6 is a block diagram illustrating a configuration of a 5GC unit;
Fig. 7 is a flowchart illustrating an outline from cell search to idle operation performed by a communication terminal (UE) in an NR communication system;
Fig. 8 is a diagram illustrating an example of a configuration of a cell in an NR system;
Fig. 9 is a connection configuration diagram illustrating an example of a connection configuration of terminals in SL communication;
Fig. 10 is a connection configuration diagram illustrating an example of a connection configuration of base stations supporting an integrated access and backhaul;
Fig. 11 is a diagram illustrating a sequence example of a method of transmitting information on UL data and preference information on a configuration of a CG from a UE to a gNB according to a first embodiment; and
Fig. 12 is a diagram illustrating a sequence example of a method of transmitting information on UL data and DL data from a gNB to an AF according to the first embodiment.

### DETAILED DESCRIPTION

### First Embodiment

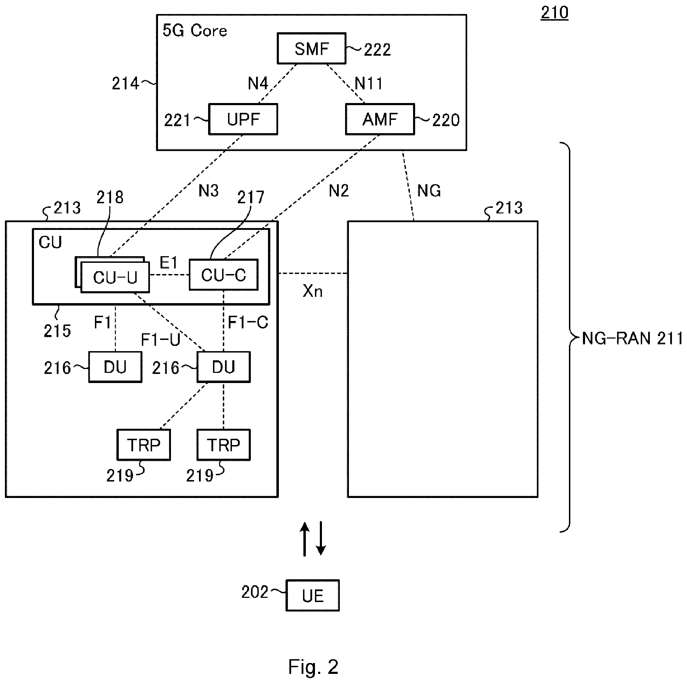

Fig. 2 is a block diagram illustrating an overall configuration of an NR communication system 210 discussed in 3GPP. Fig. 2 will be described. A radio access network is referred to as a next generation radio access network (NG-RAN) 211. A mobile terminal apparatus (hereinafter referred to as a "mobile terminal (user equipment (UE))") 202 being a communication terminal apparatus is capable of radio communication with a base station apparatus (hereinafter referred to as an "NR base station (NG-RAN Node B (gNB))") 213, and transmits and receives signals in radio communication. The NG-RAN 211 includes one or a plurality of NR base stations 213.

Here, the "communication terminal apparatus" includes not only the mobile terminal apparatus such as a mobile cellular phone terminal apparatus, but also includes an immobile device such as a sensor. In the following description, the "communication terminal apparatus" may be simply referred to as a "communication terminal".

A protocol of Access Stratum (AS) is terminated between the UE 202 and the NG-RAN 211. As the protocol of AS, for example, Radio Resource Control (RRC), Service Data Adaptation Protocol (SDAP), Packet Data Convergence Protocol (PDCP), Radio Link Control (RLC), Medium Access Control (MAC), and Physical layer (PHY) are used. The RRC is used in a control plane (which may be hereinafter also referred to as a C plane or a C-Plane), the SDAP is used in a user plane (which may be hereinafter also referred to as a U plane or a U-Plane), and the PDCP, the MAC, the RLC, and the PHY are used in both of the C plane and the U plane.

The control protocol Radio Resource Control (RRC) between the UE 202 and the NR base station 213 performs broadcast, paging, RRC connection management, and the like. States between the NR base station 213 and the UE 202 in RRC include RRC_IDLE, RRC_CONNECTED, and RRC_INACTIVE.

In RRC_IDLE, public land mobile network (PLMN) selection, system information (SI) broadcast, paging, cell re-selection, mobility, and the like are performed. In RRC_CONNECTED, the mobile terminal has RRC connection, and can transmit and receive data to and from a network. In RRC_CONNECTED, handover (HO), neighbor cell measurement, and the like are performed. In RRC_INACTIVE, connection between a 5G core unit 214 and the NR base station 213 is maintained, and system information (SI) broadcast, paging, cell re-selection, mobility, and the like are performed.

The gNB 213 is connected to the 5G core unit (which may be hereinafter referred to as a "5GC unit") 214 including an Access and Mobility Management Function (AMF), a Session Management Function (SMF), a User Plane Function (UPF), and the like via an NG interface. Control information and/or user data is communicated between the gNB 213 and the 5GC unit 214. The NG interface is a general term for an N2 interface between the gNB 213 and an AMF 220, an N3 interface between the gNB 213 and a UPF 221, an N11 interface between the AMF 220 and an SMF 222, and an N4 interface between the UPF 221 and the SMF 222. A plurality of 5GC units 214 may be connected to one gNB 213. The gNBs 213 are connected via an Xn interface, and control information and/or user data is communicated between the gNBs 213.

The 5GC unit 214 is an upper apparatus, or specifically an upper node, and performs control of connection between the NR base station 213 and the mobile terminal (UE) 202, distribution of paging signals to one or a plurality of NR base stations (gNBs) 213 and/or LTE base stations (E-UTRAN Node Bs (eNBs)), and the like. The 5GC unit 214 performs mobility control of an idle state. In a case in which the mobile terminal 202 is in an idle state, an inactive state, and an active state, the 5GC unit 214 manages a tracking area list. The 5GC unit 214 transmits a paging message to a cell belonging to a tracking area in which the mobile terminal 202 is registered, and thereby starts a paging protocol.

The gNB 213 may configure one or a plurality of cells. In a case in which one gNB 213 configures a plurality of cells, each cell is configured to be capable of communicating with the UE 202.

The gNB 213 may be divided into a central unit (which may be hereinafter referred to as a CU) 215 and a distributed unit (which may be hereinafter referred to as a DU) 216. One CU 215 is configured in the gNB 213. One or a plurality of DUs 216 are configured in the gNB 213. One DU 216 configures one or a plurality of cells. The CU 215 is connected to the DU 216 via an F1 interface, and control information and/or user data is communicated between the CU 215 and the DU 216. The F1 interface includes an F1-C interface and an F1-U interface. The CU 215 has a function of each protocol of the RRC, the SDAP, and the PDCP, and the DU 216 has a function of each protocol of the RLC, the MAC, and the PHY. One or a plurality of transmission reception points (TRPs) 219 may be connected to the DU 216. The TRP 219 transmits and receives radio signals to and from the UE.

The CU 215 may be divided into a C-plane CU (CU-C) 217 and a U-plane CU (CU-U) 218. One CU-C 217 is configured in the CU 215. One or a plurality of CU-Us 218 are configured in the CU 215. The CU-C 217 is connected to the CU-U 218 via an E1 interface, and control information is communicated between the CU-C 217 and the CU-U 218. The CU-C 217 is connected to the DU 216 via an F1-C interface, and control information is communicated between the CU-C 217 and the DU 216. The CU-U 218 is connected to the DU 216 via an F1-U interface, and user data is communicated between the CU-U 218 and the DU 216.

In the 5G communication system, a Unified Data Management (UDM) function and a Policy Control Function (PCF) described in NPL 10 (3GPP TS 23.501) may be included. The UDM and/or the PCF may be included in the 5GC unit 214 of Fig. 2.

In the 5G communication system, a Location Management Function (LMF) described in NPL 24 (3GPP TS 38.305) may be provided. As disclosed in NPL 25 (3GPP TS 23.273), the LMF may be connected to the base station via the AMF.

In the 5G communication system, a Non-3GPP Interworking Function (N3IWF) described in NPL 10 (3GPP TS 23.501) may be included. The N3IWF may terminate an access network (AN) between the N3IWF and the UE in non-3GPP access with the UE.

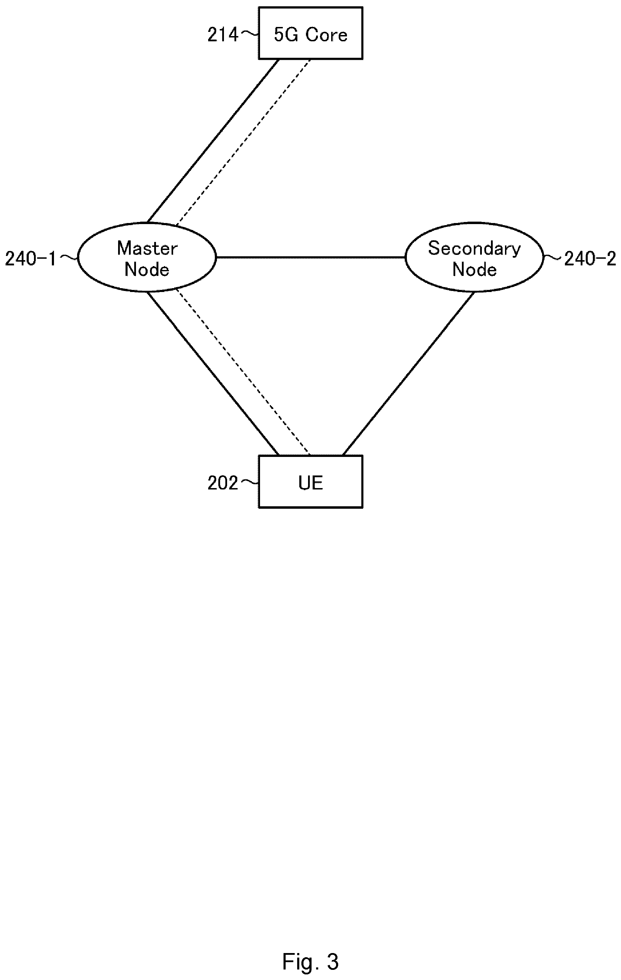

Fig. 3 is a diagram illustrating a configuration of dual connectivity (DC) to connect to an NG core. In Fig. 3, the solid line indicates connection of the U-Plane, and the broken line indicates connection of the C-Plane. In Fig. 3, a master base station 240-1 may be a gNB or an eNB. A secondary base station 240-2 may be a gNB or an eNB. For example, in Fig. 3, a DC configuration in which the master base station 240-1 is a gNB and the secondary base station 240-2 is an eNB may be referred to as NG-EN-DC. Although Fig. 3 illustrates an example in which U-Plane connection between the 5GC unit 214 and the secondary base station 240-2 is performed via the master base station 240-1, the U-Plane connection may be directly performed between the 5GC unit 214 and the secondary base station 240-2. In Fig. 3, in place of the 5GC unit 214, an Evolved Packet Core (EPC), which is a core network connected to the LTE system or the LTE-A system, may be connected to the master base station 240-1. U-Plane connection between the EPC and the secondary base station 240-2 may be directly performed.

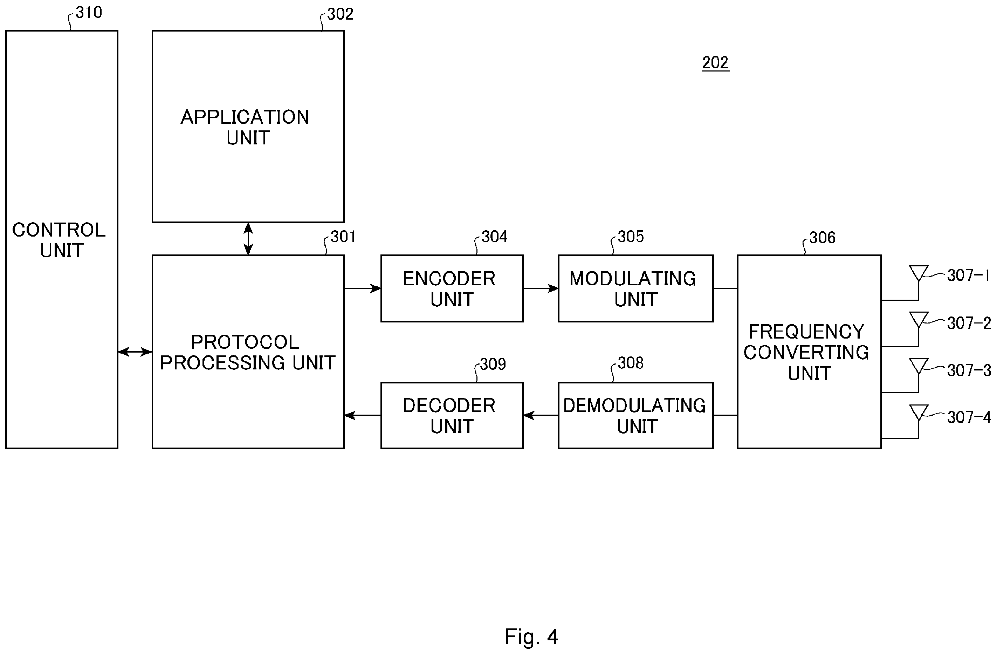

Fig. 4 is a block diagram illustrating a configuration of the mobile terminal 202 illustrated in Fig. 2. Transmission processing of the mobile terminal 202 illustrated in Fig. 4 will be described. First, control data from a control unit 310 and user data from an application unit 302 are transmitted to a protocol processing unit 301. The control data and the user data may be buffered. The buffers of the control data and the user data may be provided in the control unit 310, may be provided in the application unit 302, or may be provided in the protocol processing unit 301. The protocol processing unit 301 performs protocol processing of the SDAP, the PDCP, the RLC, the MAC, and the like, for example, operation such as determination of a transmission destination base station in DC or the like and provision of a header in each protocol. The data subjected to the protocol processing is delivered to an encoder unit 304, and is subjected to encoding processing such as error correction. There may be data that is directly output from the protocol processing unit 301 to a modulating unit 305 without being subjected to the encoding processing. The data subjected to the encoding processing in the encoder unit 304 is subjected to modulation processing in the modulating unit 305. In the modulating unit 305, MIMO precoding may be performed. The modulated data is converted into a baseband signal, and is then output to a frequency converting unit 306 to be converted into a radio transmission frequency. Subsequently, transmission signals are transmitted from antennas 307-1 to 307-4 to the base station 213. Although Fig. 4 illustrates an example of a case in which the number of antennas is four, the number of antennas is not limited to four.

Reception processing of the mobile terminal 202 is performed as follows. A radio signal from the base station 213 is received by the antennas 307-1 to 307-4. The received signal is converted from a radio reception frequency into a baseband signal in the frequency converting unit 306, and is subjected to demodulation processing in a demodulating unit 308. In the demodulating unit 308, weight calculation and multiplication processing may be performed. The demodulated data is delivered to a decoder unit 309, and is subjected to decoding processing such as error correction. The decoded data is delivered to the protocol processing unit 301, and is subjected to protocol processing of the MAC, the RLC, the PDCP, the SDAP, and the like, for example, operation such as removal of a header in each protocol. Of the data subjected to the protocol processing, the control data is delivered to the control unit 310 and the user data is delivered to the application unit 302.

The series of processing of the mobile terminal 202 is controlled by the control unit 310. Thus, the control unit 310 is also connected to each of the units 302 and 304 to 309, of which illustration is omitted in Fig. 4.

Each unit of the mobile terminal 202, such as the control unit 310, the protocol processing unit 301, the encoder unit 304, and the decoder unit 309, is implemented by processing circuitry including a processor and a memory, for example. For example, the control unit 310 is implemented by the processor executing a program describing the series of processing of the mobile terminal 202. The program describing the series of processing of the mobile terminal 202 is stored in the memory. Examples of the memory include non-volatile or volatile semiconductor memories, such as a random access memory (RAM), a read only memory (ROM), and a flash memory. Each unit of the mobile terminal 202, such as the control unit 310, the protocol processing unit 301, the encoder unit 304, and the decoder unit 309, may be implemented by dedicated processing circuitry such as a field programmable gate array (FPGA), an application specific integrated circuit (ASIC), and a digital signal processor (DSP). In Fig. 4, the number of antennas used by the mobile terminal 202 for transmission and the number of antennas used thereby for reception may be the same or different.

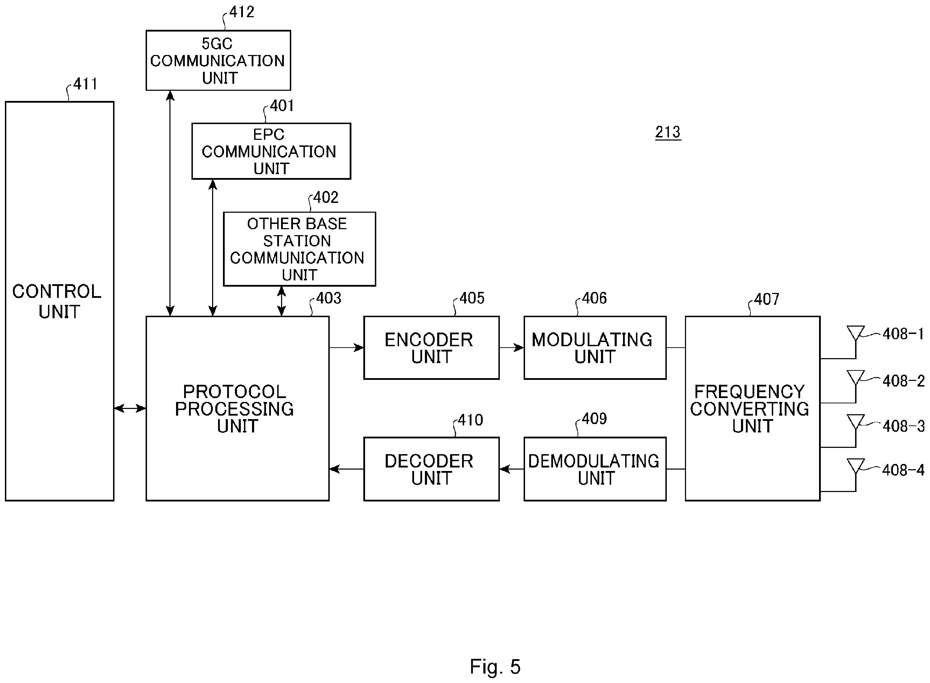

Fig. 5 is a block diagram illustrating a configuration of the base station 213 illustrated in Fig. 2. Transmission processing of the base station 213 illustrated in Fig. 5 will be described. An EPC communication unit 401 transmits and receives data between the base station 213 and the EPC. A 5GC communication unit 412 transmits and receives data between the base station 213 and the 5GC (such as the 5GC unit 214). Another base station communication unit 402 transmits and receives data to and from another base station. Each of the EPC communication unit 401, the 5GC communication unit 412, and such another base station communication unit 402 exchanges information with a protocol processing unit 403. Control data from a control unit 411 and user data and control data from the EPC communication unit 401, the 5GC communication unit 412, and such another base station communication unit 402 are transmitted to the protocol processing unit 403. The control data and the user data may be buffered. The buffers of the control data and the user data may be provided in the control unit 411, may be provided in the EPC communication unit 401, may be provided in the 5GC communication unit 412, or may be provided in such another base station communication unit 402.

The protocol processing unit 403 performs protocol processing of the SDAP, the PDCP, the RLC, the MAC, and the like, for example, operation such as routing of transmission data in DC or the like and provision of a header in each protocol. The data subjected to the protocol processing is delivered to an encoder unit 405, and is subjected to encoding processing such as error correction. There may be data that is directly output from the protocol processing unit 403 to a modulating unit 406 without being subjected to the encoding processing. The data may be transmitted from the protocol processing unit 403 to such another base station communication unit 402. For example, in DC, the data transmitted from the 5GC communication unit 412 or the EPC communication unit 401 may be transmitted to another base station, such as the secondary base station, via such another base station communication unit 402. The encoded data is subjected to modulation processing in the modulating unit 406. In the modulating unit 406, MIMO precoding may be performed. The modulated data is converted into a baseband signal, and is then output to a frequency converting unit 407 to be converted into a radio transmission frequency. Subsequently, transmission signals are transmitted from antennas 408-1 to 408-4 to one or a plurality of mobile terminals 202. Although Fig. 5 illustrates an example of a case in which the number of antennas is four, the number of antennas is not limited to four.

Reception processing of the base station 213 is performed as follows. A radio signal from one or a plurality of mobile terminals 202 is received by the antennas 408-1 to 408-4. The received signal is converted from a radio reception frequency into a baseband signal in the frequency converting unit 407, and is subjected to demodulation processing in a demodulating unit 409. The demodulated data is delivered to a decoder unit 410, and is subjected to decoding processing such as error correction. The decoded data is delivered to the protocol processing unit 403, and is subjected to protocol processing of the MAC, the RLC, the PDCP, the SDAP, and the like, for example, operation such as removal of a header in each protocol. Of the data subjected to the protocol processing, the control data is delivered to the control unit 411, the 5GC communication unit 412, the EPC communication unit 401, or such another base station communication unit 402, and the user data is delivered to the 5GC communication unit 412, the EPC communication unit 401, or such another base station communication unit 402. The data transmitted from such another base station communication unit 402 may be transmitted to the 5GC communication unit 412 or the EPC communication unit 401. The data may be uplink data transmitted to the 5GC communication unit 412 or the EPC communication unit 401 unit via another base station in DC, for example.

The series of processing of the base station 213 is controlled by the control unit 411. Thus, the control unit 411 is also connected to each of the units 401, 402, 405 to 410, and 412, of which illustration is omitted in Fig. 5.

Each unit of the base station 213, such as the control unit 411, the protocol processing unit 403, the 5GC communication unit 412, the EPC communication unit 401, such another base station communication unit 402, the encoder unit 405, and the decoder unit 410, is implemented by processing circuitry including a processor and a memory or dedicated processing circuitry such as an FPGA, an ASIC, and a DSP, as in the case of the mobile terminal 202 described above. **In** Fig. 5, the number of antennas used by the base station 213 for transmission and the number of antennas used thereby for reception may be the same or different.

As an example of a configuration of the CU 215 illustrated in Fig. 2, a configuration provided with a DU communication unit may be used, except the encoder unit 405, the modulating unit 406, the frequency converting unit 407, the antennas 408-1 to 408-4, the demodulating unit 409, and the decoder unit 410 illustrated in Fig. 5. The DU communication unit is connected to the protocol processing unit 403. The protocol processing unit 403 in the CU 215 performs protocol processing of the PDCP, the SDAP, and the like.

As an example of a configuration of the DU 216 illustrated in Fig. 2, a configuration provided with a CU communication unit may be used, except the EPC communication unit 401, such another base station communication unit 402, and the 5GC communication unit 412 illustrated in Fig. 5. The CU communication unit is connected to the protocol processing unit 403. The protocol processing unit 403 in the DU 216 performs protocol processing of the PHY, the MAC, the RLC, and the like.

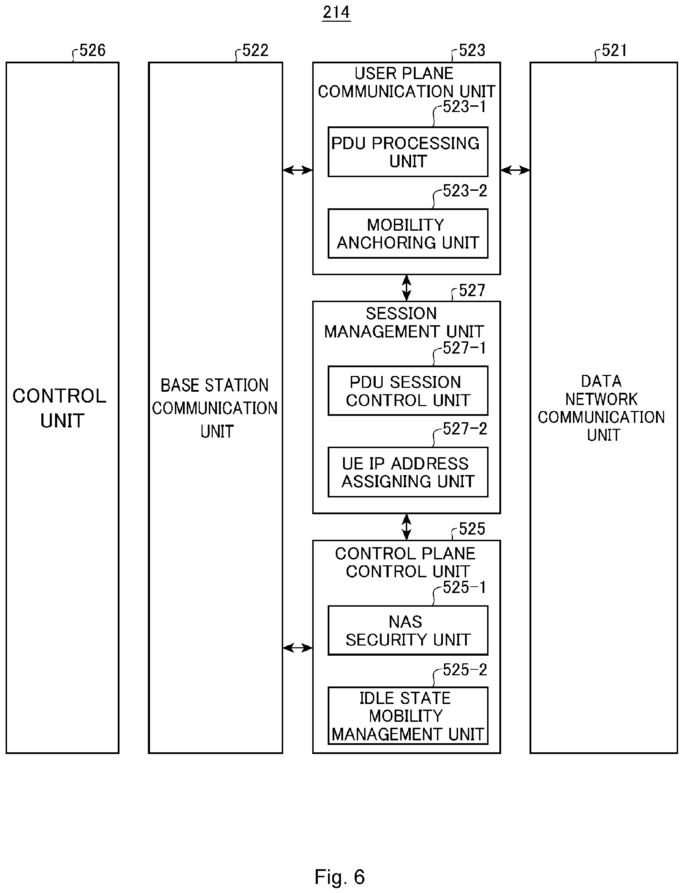

Fig. 6 is a block diagram illustrating a configuration of the 5GC unit. Fig. 6 illustrates a configuration of the 5GC unit 214 illustrated in Fig. 2 described above. Fig. 6 illustrates a case in which a configuration of the AMF, a configuration of the SMF, and a configuration of the UPF are included in the 5GC unit 214 illustrated in Fig. 2. In the example illustrated in Fig. 6, the AMF may have a function of a control plane control unit 525, the SMF may have a function of a session management unit 527, and the UPF may have a function of a user plane communication unit 523 and a data network communication unit 521. The data network communication unit 521 transmits and receives data between the 5GC unit 214 and a data network. The base station communication unit 522 transmits and receives data between the 5GC unit 214 and the base station 213 via an NG interface. User data transmitted from the data network is delivered from the data network communication unit 521 to the base station communication unit 522 via the user plane communication unit 523, and is transmitted to one or a plurality of base stations 213. User data transmitted from the base station 213 is delivered from the base station communication unit 522 to the data network communication unit 521 via the user plane communication unit 523, and is transmitted to the data network.

Control data transmitted from the base station 213 is delivered from the base station communication unit 522 to the control plane control unit 525. The control plane control unit 525 may deliver the control data to the session management unit 527. The control data may be transmitted from the data network. The control data transmitted from the data network may be transmitted from the data network communication unit 521 to the session management unit 527 via the user plane communication unit 523. The session management unit 527 may transmit the control data to the control plane control unit 525.

The user plane control unit 523 includes a PDU processing unit 523-1, a mobility anchoring unit 523-2, and the like, and performs general processing on the user plane (which may be hereinafter also referred to as a U-Plane). The PDU processing unit 523-1 performs processing of data packets, for example, transmission and reception of packets to and from the data network communication unit 521 and transmission and reception of packets to and from the base station communication unit 522. The mobility anchoring unit 523-2 anchors a data path at the time of mobility of the UE.

The session management unit 527 performs management of a PDU session provided between the UE and the UPF and the like. The session management unit 527 includes a PDU session control unit 527-1, a UE IP address assigning unit 527-2, and the like. The PDU session control unit 527-1 performs management of a PDU session between the mobile terminal 202 and the 5GC unit 214. The UE IP address assigning unit 527-2 performs assignment of an IP address to the mobile terminal 202 and the like.

The control plane control unit 525 includes a NAS security unit 525-1, an idle state mobility management unit 525-2, and the like, and performs general processing on the control plane (which may be hereinafter also referred to as a C-Plane). The NAS security unit 525-1 performs security of a Non-Access Stratum (NAS) message and the like. The idle state mobility management unit 525-2 performs mobility management of the idle state (which may also be simply referred to as an "RRC_IDLE state" or "idle"), generation and control of a paging signal in the idle state, addition, deletion, update, search, and tracking area list management of a tracking area of one or a plurality of served mobile terminals 202, and the like.

The series of processing of the 5GC unit 214 is controlled by a control unit 526. Thus, the control unit 526 is connected to each of the units 521 to 523, 525, and 527, of which illustration is omitted in Fig. 6. Each unit of the 5GC unit 214 is implemented by processing circuitry including a processor and a memory or dedicated processing circuitry such as an FPGA, an ASIC, and a DSP, for example, as in the case of the control unit 310 of the mobile terminal 202 described above.

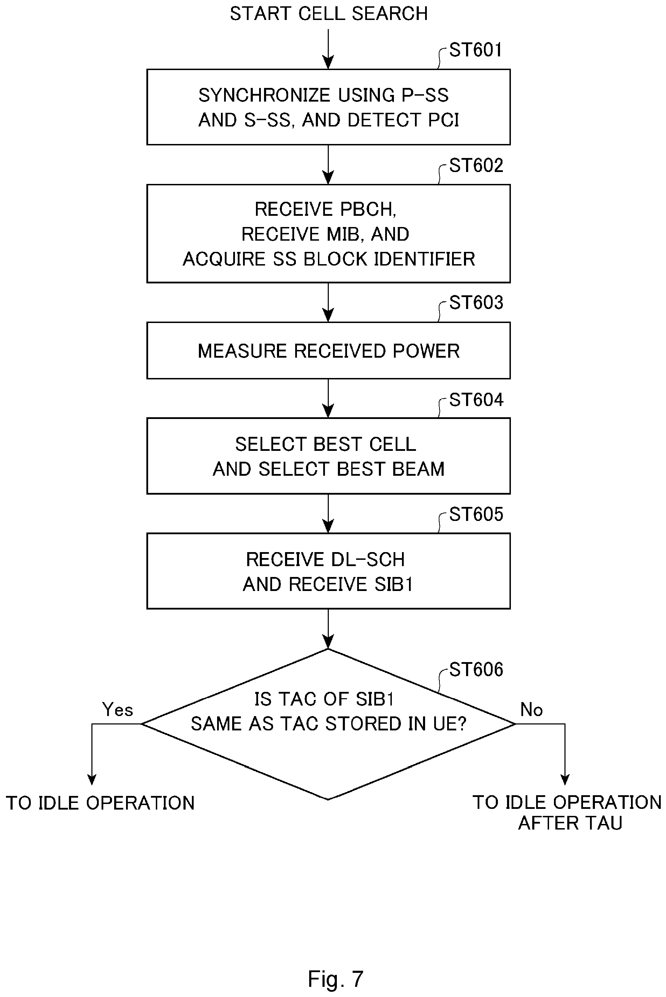

Next, an example of a cell search method in the communication system will be described. Fig. 7 is a flowchart illustrating an outline from cell search to idle operation performed by the communication terminal (UE) in the NR communication system. After the communication terminal starts cell search, in Step ST601, the communication terminal establishes synchronization of a slot timing and a frame timing, using a primary synchronization signal (P-SS) and a secondary synchronization signal (S-SS) transmitted from a neighbor base station.

The P-SS and the S-SS are collectively referred to as a synchronization signal (SS). The synchronization signal (SS) is assigned a synchronization code that corresponds to a physical cell identifier (PCI) assigned to each cell on a one-to-one basis. It is studied that the number of PCIs is 1008. The communication terminal establishes synchronization using the 1008 PCIs, and detects (identifies) the PCI(s) of synchronized cell(s).

Next, in Step ST602, the communication terminal receives a PBCH of the synchronized cell. A master information block (MIB) including cell configuration information is mapped to a BCCH on the PBCH. Thus, by receiving the PBCH and obtaining the BCCH, the MIB can be obtained. Examples of information of the MIB include a system frame number (SFN), scheduling information of a system information block (SIB) 1, subcarrier spacing for the SIB1 or the like, information of a DM-RS position, and the like.

The communication terminal acquires an SS block identifier on the PBCH. A part of a bit string of the SS block identifier is included in the MIB. The rest of the bit string is included in an identifier used to generate a DM-RS sequence accompanying the PBCH. The communication terminal acquires the SS block identifier, using the MIB included in the PBCH and the DM-RS sequence accompanying the PBCH.

Next, in Step ST603, the communication terminal measures received power of an SS block.

Next, in Step ST604, the communication terminal selects a cell having the best received quality, for example, a cell having the highest received power, in other words, the best cell, out of the one or more cells detected up to Step ST603. The communication terminal selects a beam having the best received quality, for example, a beam having the highest received power of the SS block, in other words, the best beam. In selection of the best beam, for example, received power of the SS block of each SS block identifier is used.

Next, in Step ST605, the communication terminal receives a DL-SCH based on the scheduling information of the SIB1 included in the MIB, and obtains the system information block (SIB) 1 in the broadcast information BCCH. The SIB1 includes information on access to the cell, cell configuration information, and scheduling information of another SIB (SIBk: k is an integer satisfying k ≥ 2). The SIB1 includes a tracking area code (TAC).

Next, in Step ST606, the communication terminal compares the TAC of the SIB1 received in Step ST605 and a TAC part of a tracking area identity (TAI) in a tracking area list already stored in the communication terminal. The tracking area list is also referred to as a TAI list. The TAI is identification information for identifying the tracking area, and includes a mobile country code (MCC), a mobile network code (MNC), and a tracking area code (TAC). The MCC is a country code. The MNC is a network code. The TAC is a code number of a tracking area.

As a result of the comparison in Step ST606, if the TAC received in Step ST605 is the same as the TAC included in the tracking area list, the communication terminal starts idle operation in the cell. As a result of the comparison, if the TAC received in Step ST605 is not included in the tracking area list, the communication terminal requests, via the cell, the core network (EPC) including an MME and the like to change the tracking area in order to perform tracking area update (TAU).

An apparatus configuring the core network (which may be hereinafter referred to as a "core network-side apparatus") updates the tracking area list, based on an identification number (a UE-ID or the like) of the communication terminal transmitted from the communication terminal together with a TAU request signal. The core network-side apparatus transmits the updated tracking area list to the communication terminal. The communication terminal rewrites (updates) a TAC list stored in the communication terminal, based on the received tracking area list. Subsequently, the communication terminal starts idle operation in the cell.

Next, an example of a random access method in the communication system will be described. In random access, 4-step random access and 2-step random access are used. In each of the 4-step random access and the 2-step random access, there are contention-based random access, in other words, random access which may cause contention of timings with other mobile terminals, and contention-free random access.

An example of a contention-based 4-step random access method will be described. As a first step, the mobile terminal transmits a random access preamble to the base station. The random access preamble may be selected by the mobile terminal from a predetermined range, or may be individually assigned to the mobile terminal and notified from the base station.

As a second step, the base station transmits a random access response to the mobile terminal. The random access response includes uplink scheduling information to be used in a third step, a terminal identifier to be used in uplink transmission in the third step, and the like.

As the third step, the mobile terminal performs uplink transmission to the base station. The mobile terminal uses the information acquired in the second step in the uplink transmission. As a fourth step, the base station notifies the mobile terminal as to whether contention resolution is achieved. The mobile terminal notified of "without contention" ends random access processing. The mobile terminal notified of "with contention" resumes processing from the first step.

A contention-free 4-step random access method is different from the contention-based 4-step random access method in the following. In other words, prior to the first step, the base station assigns a random access preamble and uplink scheduling to the mobile terminal in advance. A notification as to whether contention resolution is achieved in the fourth step is unnecessary.

An example of a contention-based 2-step random access method will be described. As a first step, the mobile terminal performs transmission of a random access preamble and uplink transmission to the base station. As a second step, the base station notifies the mobile terminal as to whether there is contention. The mobile terminal notified of "without contention" ends random access processing. The mobile terminal notified of "with contention" resumes processing from the first step.

A contention-free 2-step random access method is different from the contention-based 2-step random access method in the following. In other words, prior to the first step, the base station assigns a random access preamble and uplink scheduling to the mobile terminal in advance. As a second step, the base station transmits a random access response to the mobile terminal.

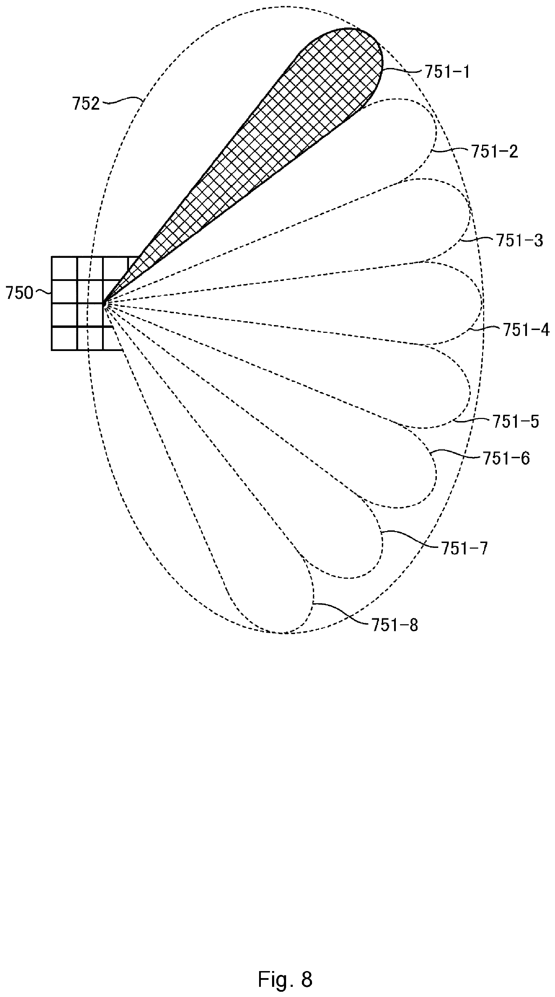

Fig. 8 illustrates an example of a configuration of a cell in NR. In a cell in NR, a narrow beam is formed and is transmitted with its direction being changed. In the example illustrated in Fig. 8, a base station 750 performs transmission and reception to and from the mobile terminal, using a beam 751-1 at a certain time. At another time, the base station 750 performs transmission and reception to and from the mobile terminal, using a beam 751-2. Subsequently, similarly, the base station 750 performs transmission and reception to and from the mobile terminal, using one or a plurality of beams 751-3 to 751-8. In this manner, the base station 750 configures a cell 752 having a wide range.

Although Fig. 8 illustrates an example in which the number of beams used by the base station 750 is eight, the number of beams may be different from eight. In the example illustrated in Fig. 8, although the number of beams simultaneously used by the base station 750 is one, the number of beams may be more than one.

A concept of quasi-colocation (QCL) is used in identification of a beam (see NPL 14 (3GPP TS 38.214)). In other words, identification is performed using information indicating as which beam of a reference signal (for example, an SS block, a CSI-RS) the beam can be considered to be the same. The information may include types of information regarding aspects in which the beam can be considered to be the same beam, for example, information on a Doppler shift, a Doppler shift spread, an average delay, an average delay spread, and a spatial Rx parameter (see NPL 14 (3GPP TS 38.214)).

In 3GPP, a sidelink (SL) is supported for device-to-device (D2D) communication and vehicle-to-vehicle (V2V) communication (see NPL 1 and NPL 16). The SL is defined by a PC5 interface.

In SL communication, support of PC5-S signaling is studied in order to support unicast and groupcast in addition to broadcast (see NPL 27 (3GPP TS 23.287)). For example, the PC5-S signaling is performed to establish the SL, in other words, a link for performing PC5 communication. The link is performed in a V2X layer, and is also referred to as a layer 2 link.

In the SL communication, support of RRC signaling is studied (see NPL 27 (3GPP TS 23.287)). The RRC signaling in the SL communication is also referred to as PC5 RRC signaling. For example, notification of a UE capability and notification of an AS layer configuration and the like for performing V2X communication using the PC5 communication between the UEs performing the PC5 communication are proposed.

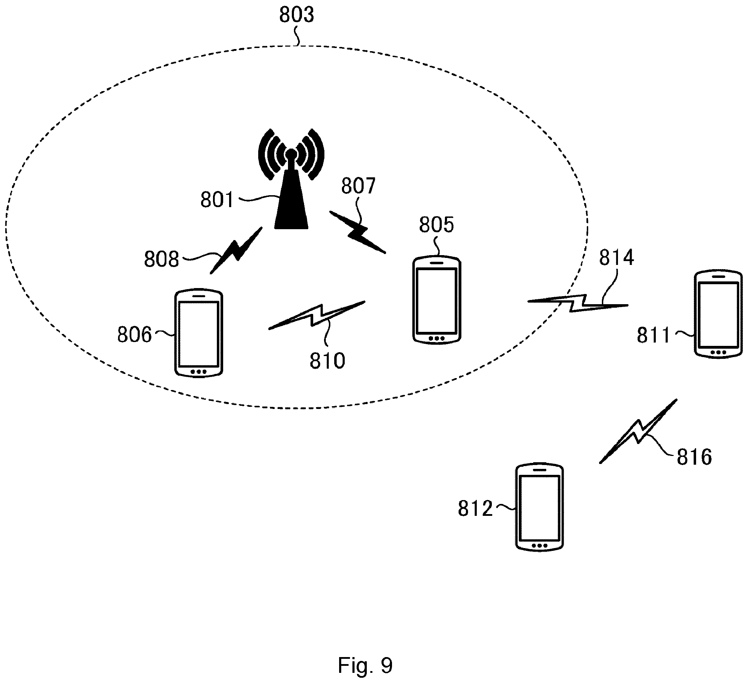

An example of a connection configuration of the mobile terminals in the SL communication is illustrated in Fig. 9. In the example illustrated in Fig. 9, a UE 805 and a UE 806 are present inside coverage 803 of a base station 801. UL/DL communication 807 is performed between the base station 801 and the UE 805. UL/DL communication 808 is performed between the base station 801 and the UE 806. SL communication 810 is performed between the UE 805 and the UE 806. A UE 811 and a UE 812 are present outside the coverage 803. SL communication 814 is performed between the UE 805 and the UE 811. SL communication 816 is performed between the UE 811 and the UE 812.

As an example of communication between the UE and the NW via relay in the SL communication, the UE 805 illustrated in Fig. 9 relays communication between the UE 811 and the base station 801.

A configuration similar to that of Fig. 4 may be used for the UE performing the relay. Relay processing in the UE will be described with reference to Fig. 4. Relay processing performed by the UE 805 in communication from the UE 811 to the base station 801 will be described. A radio signal from the UE 811 is received by the antennas 307-1 to 307-4. The received signal is converted from a radio reception frequency into a baseband signal in the frequency converting unit 306, and is subjected to demodulation processing in the demodulating unit 308. In the demodulating unit 308, weight calculation and multiplication processing may be performed. The demodulated data is delivered to the decoder unit 309, and is subjected to decoding processing such as error correction. The decoded data is delivered to the protocol processing unit 301, and is subjected to protocol processing of the MAC, the RLC, and the like used for communication with the UE 811, for example, operation such as removal of a header in each protocol. Protocol processing of the RLC, the MAC, and the like used for communication with the base station 801, for example, operation such as provision of a header in each protocol, is performed. In the protocol processing unit 301 of the UE 811, protocol processing of the PDCP and the SDAP may be performed. The data subjected to the protocol processing is delivered to the encoder unit 304, and is subjected to encoding processing such as error correction. There may be data that is directly output from the protocol processing unit 301 to the modulating unit 305 without being subjected to the encoding processing. The data subjected to the encoding processing in the encoder unit 304 is subjected to modulation processing in the modulating unit 305. In the modulating unit 305, MIMO precoding may be performed. The modulated data is converted into a baseband signal, and is then output to the frequency converting unit 306 to be converted into a radio transmission frequency. Subsequently, transmission signals are transmitted from the antennas 307-1 to 307-4 to the base station 801.

Although the above description illustrates an example of the relay performed by the UE 805 in communication from the UE 811 to the base station 801, similar processing is also used in relay in communication from the base station 801 to the UE 811.

A 5G base station can support an integrated access and backhaul (IAB) (see NPLs 2 and 20). A base station supporting the IAB (which may be hereinafter referred to as an IAB base station) includes an IAB donor CU being a CU of the base station that operates as an IAB donor providing an IAB function, an IAB donor DU being a DU of the base station that operates as an IAB donor, and an IAB node connected to the IAB donor DU and the UE using a radio interface. An F1 interface is provided between the IAB node and the IAB donor CU (see NPL 2).

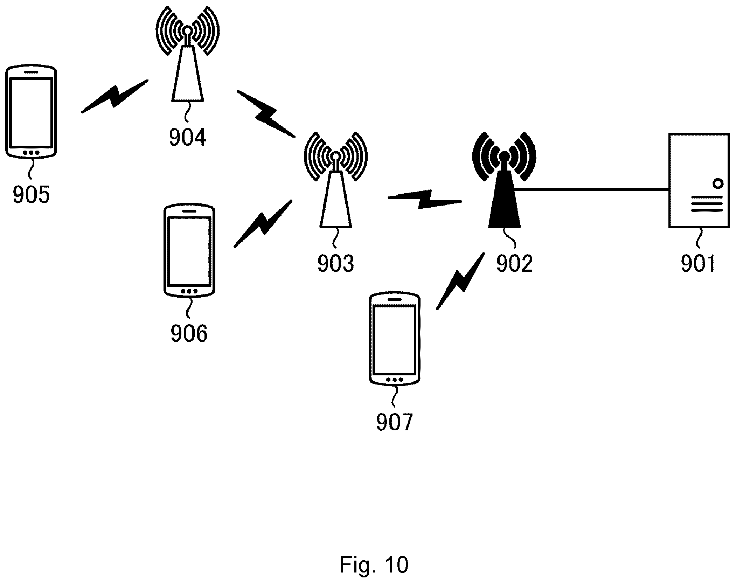

An example of connection of the IAB base stations is illustrated in Fig. 10. An IAB donor CU 901 is connected to an IAB donor DU 902. An IAB node 903 is connected to the IAB donor DU 902, using a radio interface. The IAB node 903 is connected to an IAB node 904, using a radio interface. In other words, multi-stage connection of the IAB nodes may be performed. A UE 905 is connected to the IAB node 904, using a radio interface. A UE 906 may be connected to the IAB node 903 using a radio interface, or a UE 907 may be connected to the IAB donor DU 902 using a radio interface. A plurality of IAB donor DUs 902 may be connected to the IAB donor CU 901, a plurality of IAB nodes 903 may be connected to the IAB donor DU 902, or a plurality of IAB nodes 904 may be connected to the IAB node 903.

A Backhaul Adaptation Protocol (BAP) layer is provided in connection between the IAB donor DU and the IAB node and connection between the IAB nodes (see NPL 29). The BAP layer performs operation such as routing of received data to the IAB donor DU and/or the IAB node and mapping of the received data to an RLC channel (see NPL 29).

As an example of a configuration of the IAB donor CU, a configuration similar to that of the CU 215 is used.

As an example of a configuration of the IAB donor DU, a configuration similar to that of the DU 216 is used. In the protocol processing unit of the IAB donor DU, processing of the BAP layer, for example, processing such as provision of a BAP header in downlink data, routing to the IAB node, and removal of the BAP header in uplink data, is performed.

As an example of a configuration of the IAB node, a configuration except the EPC communication unit 401, such another base station communication unit 402, and the 5GC communication unit 412 illustrated in Fig. 5 may be used.

Transmission and reception processing in the IAB node will be described with reference to Fig. 5 and Fig. 10. Transmission and reception processing of the IAB node 903 in communication between the IAB donor CU 901 and the UE 905 will be described. In uplink communication from the UE 905 to the IAB donor CU 901, a radio signal from the IAB node 904 is received by the antenna(s) 408 (a part or all of the antennas 408-1 to 408-4). The received signal is converted from a radio reception frequency into a baseband signal in the frequency converting unit 407, and is subjected to demodulation processing in the demodulating unit 409. The demodulated data is delivered to the decoder unit 410, and is subjected to decoding processing such as error correction. The decoded data is delivered to the protocol processing unit 403, and is subjected to protocol processing of the MAC, the RLC, and the like used for communication with the IAB node 904, for example, operation such as removal of a header in each protocol. Routing to the IAB donor DU 902 using a BAP header is performed, and protocol processing of the RLC, the MAC, and the like used for communication with the IAB donor DU 902, for example, operation such as provision of a header in each protocol, is performed. The data subjected to the protocol processing is delivered to the encoder unit 405, and is subjected to encoding processing such as error correction. There may be data that is directly output from the protocol processing unit 403 to the modulating unit 406 without being subjected to the encoding processing. The encoded data is subjected to modulation processing in the modulating unit 406. In the modulating unit 406, MIMO precoding may be performed. The modulated data is converted into a baseband signal, and is then output to the frequency converting unit 407 to be converted into a radio transmission frequency. Subsequently, transmission signals are transmitted to the IAB donor DU 902 from the antennas 408-1 to 408-4. Similar processing is also performed in downlink communication from the IAB donor CU 901 to the UE 905.

Transmission and reception processing similar to that of the IAB node 903 is also performed in the IAB node 904. In the protocol processing unit 403 of the IAB node 903, as processing of the BAP layer, for example, processing such as provision of a BAP header in uplink communication, routing to the IAB node 904, and removal of the BAP header in downlink communication is performed.

In a 5G radio access system, enabling communication suited to XR and cloud gaming services is an important problem. In 3GPP, characteristics of XR traffic are studied (see NPL 34). Presented examples of the characteristics of the XR traffic include non-integer periodicity, data generation time variation (jitter) characteristics, data volume variation characteristics, low latency characteristics, and the like. To enable communication suited to XR and cloud gaming services, a communication method taking account of such characteristics of the XR traffic is required.

In a case in which an XR service is communicated in the UL, UL data in XR traffic is generated in the UE, and thus the NW cannot recognize the characteristics of the UL XR traffic generated in the UE. For example, the NW cannot recognize a timing of generation, a data volume, and the like of the UL data. Even if QoS of the UL XR traffic is configured in the NW as the XR service, the NW cannot recognize performance of the UL XR traffic actually transmitted from the UE. There may be a problem that, because the NW cannot recognize the characteristics of the UL XR traffic, the NW cannot perform scheduling or modification suited to the UL XR traffic to thereby cause reduction in communication quality.

A first embodiment will disclose a method for solving such a problem.

In the method, the UE transmits information on UL data to the gNB. Eight examples of the information on the UL data are disclosed:
(1) Data generation periodicity;
(2) Data generation jitter;
(3) Frame rate;
(4) Data rate;
(5) Data volume;
(6) Packet delay budget;
(7) Number of streams;
(8) Combination of (1) to (7).

As the UL data, generated data may be replaced by data to be transmitted. For example, a data generation timing may be replaced by a data transmission timing. For example, data generation periodicity may be replaced by data transmission periodicity, and data generation jitter may be replaced by data transmission jitter. In this manner, information of data to be actually transmitted can be obtained.

The information on the UL data generated in the UE may be present for each application data unit. The information on the UL data generated in the UE may be present for each set of data units. The set of data units may be a PDU set. The information on the UL data generated in the UE may be present for each PDU set. The information on the UL data generated in the UE may be present for each PDU set corresponding to application data. For example, it may be generation periodicity of application data, a data volume of application data, or the like. In this manner, the gNB can acquire the information on the UL data of each application data unit. The gNB can configure a CG suited to the application for performing communication.

The information on the UL data generated in the UE may be statistical data. In this case, the UE acquires statistical data of the information on the UL data. The UE may use the acquired statistical data as the information on the UL data. Examples of the statistical data include the mean, the median, a standard deviation, dispersion, a truncation range, the maximum, the minimum, the first quartile, the third quartile, the mode, the number of data units, and the like. A period of acquisition of the statistical data may be statically determined in a standard or the like. For example, it may be from the start of data communication until transmission of the information from the UE to the gNB. As another method, the NW may notify the UE of configuration information of the period of acquisition. The gNB may notify the UE of such period configuration information. The UE acquires the statistical data in accordance with the period configuration information received from the NW. The NW can configure the acquisition period according to a service state, for example. The gNB can acquire the statistical data of the information on the UL data from the UE. By using the statistical data as the information on the UL data, a large number of pieces of the information on the UL data, long-term information on the UL data, and the like can be acquired. Information taking account of variability in each piece of the information on the UL data can be acquired.

The information on the UL data generated in the UE may be statistical data of each application data unit. The methods described above may be combined as appropriate. Similar effects can be achieved for each application data unit.

The UE may notify the gNB of preference information on a configuration of a CG. Examples of the preference information on the configuration of the CG include CG period, an offset, time domain resource allocation, frequency domain resource allocation, and the like. A combination of these may be used. By receiving the preference information on the configuration of the CG from the UE, the gNB can recognize the configuration of the CG that is preferable for the UE.

The information on the UL data and the preference information on the configuration of the CG may be present for each stream. For example, they may be present for each stream of XR traffic. The gNB can acquire information of each stream. These pieces of information may be present for each QoS flow. The gNB can acquire information of each stream. These pieces of information may be information of each bearer. The gNB can acquire information of each bearer.

The gNB may perform configuration of the CG suited to communication, using the information on the UL data and the preference information on the configuration of the CG acquired from the UE. In this manner, scheduling suited to UL XR traffic can be performed, low latency characteristics can be enhanced, and communication quality can be enhanced.

A method of transmitting the information on the UL data and the preference information on the configuration of the CG from the UE to the gNB will be disclosed. RRC signaling may be used for transmission of these pieces of information. A new message may be provided for transmission of these pieces of information. Distinguishing from other information can reduce malfunction. An existing message may be used for transmission of these pieces of information. For example, a UE assistance information message may be used. Complexity of processing can be avoided. By using the RRC signaling, the amount of information can be increased. Certainty of delivery of transmission from the UE to the gNB can be enhanced. Malfunction can be reduced.

Another method of transmitting these pieces of information will be disclosed. MAC signaling may be used. Transmission may be performed by way of inclusion in a MAC CE. A new MAC CE may be provided for transmission of these pieces of information. Distinguishing from other information can reduce malfunction. An existing MAC CE may be used for transmission of these pieces of information. Complexity of processing can be avoided. By using the MAC signaling, for example, transmission can be performed from the UE to the gNB, using a PUSCH configured with the CG. Transmission processing can be simplified.

Another method of transmitting these pieces of information will be disclosed. A PUCCH may be used. Transmission may be performed by way of inclusion in UCI. New UCI may be provided for transmission of these pieces of information. Distinguishing from other information can reduce malfunction. Existing UCI may be used for transmission of these pieces of information. Complexity of processing can be avoided. By using the PUCCH, transmission can be dynamically performed at an earlier time.

These pieces of information may be periodically or regularly transmitted from the UE to the gNB. The gNB can periodically or regularly receive the information on the UL data and the information on the configuration of the CG in the UE, and can thereby recognize a state. As another method, these pieces of information may be transmitted from the UE to the gNB on a trigger basis. A condition for the UE to transmit these pieces of information to the gNB may be configured. The condition may be transmitted from the gNB to the UE in advance. Examples include a case in which a standard deviation of jitter exceeds 3 ms, a case in which a variation of the mean is equal to or more than 1 ms as compared to the last report, and the like. The gNB may transmit a condition necessary for determining whether scheduling needs to be changed to the UE. In this manner, the gNB can acquire these pieces of information at a timing when the gNB needs these pieces of information.

As another method, these pieces of information may be transmitted from the UE to the gNB on a trigger basis. A condition for the UE to transmit these pieces of information may be configured. The UE may configure a condition for causing the gNB to determine whether scheduling needs to be changed. In this manner, the gNB can acquire these pieces of information at a timing when the condition configured by the UE arises.

As another method, these pieces of information may be transmitted from the UE to the gNB on a trigger basis. The application may configure a condition for transmitting these pieces of information. The application may configure the gNB with a condition necessary for determining whether scheduling needs to be changed. The application may transmit the condition to the UE, or an application server (AS) or an application function (AF) may transmit the condition to the UE. The application may transmit the condition to the gNB, or the AS or the AF may transmit the condition to the gNB. In this manner, the gNB can acquire these pieces of information at a timing when the condition configured by the application arises in the UE.

The gNB may request the UE to transmit the information on the UL data. The gNB may request the UE to transmit the preference information on the configuration of the CG. The UE receives the transmission request for the information from the gNB. In a case in which the UE receives the transmission request for the information from the gNB, the UE may transmit the information to the gNB. As a method of transmitting the information in a case in which the UE receives the transmission request for the information from the gNB, the methods disclosed in the above may be used. Information indicating which method is to be used out of the methods of transmitting the information disclosed in the above may be transmitted from the gNB to the UE. It may be transmitted together with the transmission request for the information. The UE may configure the method of transmission, in accordance with the information indicating which method is to be used that is received from the gNB. In this manner, the gNB can flexibly configure the method of transmitting the information to the UE, and can request the UE to transmit the information.

In a case in which the UE receives the transmission request for the information from the gNB, the UE may transmit the information to the gNB. For example, in a case in which scheduling for the UL data needs to be changed in the gNB, the transmission request for the information is transmitted to the UE. In response to the transmission request for the information received from the gNB, the UE transmits the information to the gNB. In this manner, the gNB can cause the UE to transmit the information at a necessary timing.

A method of transmitting the transmission request for the information from the gNB to the UE will be disclosed. RRC signaling may be used. A new message may be provided for transmission of the transmission request for the information. Distinguishing from other information can reduce malfunction. An existing message may be used for transmission of the transmission request for the information. For example, an RRCReconfiguration message may be used. Complexity of processing can be avoided. By using the RRC signaling, the amount of information can be increased. For example, it may be transmitted together with the configuration of the CG. For example, it may be transmitted before data communication is started. The UE can acquire statistical data of the information on the UL data at an early time.

Another method of transmitting the transmission request for the information will be disclosed. MAC signaling may be used. Transmission may be performed by way of inclusion in a MAC CE. A new MAC CE may be provided for transmission of the transmission request for the information. Distinguishing from other information can reduce malfunction. An existing MAC CE may be used for transmission of the transmission request for the information. Complexity of processing can be avoided. By using the MAC signaling, transmission can be performed at an early time, and malfunction can be reduced owing to HARQ processing.

Another method of transmitting these pieces of information will be disclosed. A PDCCH may be used. Transmission may be performed by way of inclusion in DCI. New DCI may be provided for transmission of these pieces of information. Distinguishing from other information can reduce malfunction. Existing DCI may be used for transmission of these pieces of information. For example, transmission may be performed by way of inclusion in DCI for activation/deactivation of the CG. Complexity of processing can be avoided. By using the PDCCH, transmission can be dynamically performed at an earlier time.

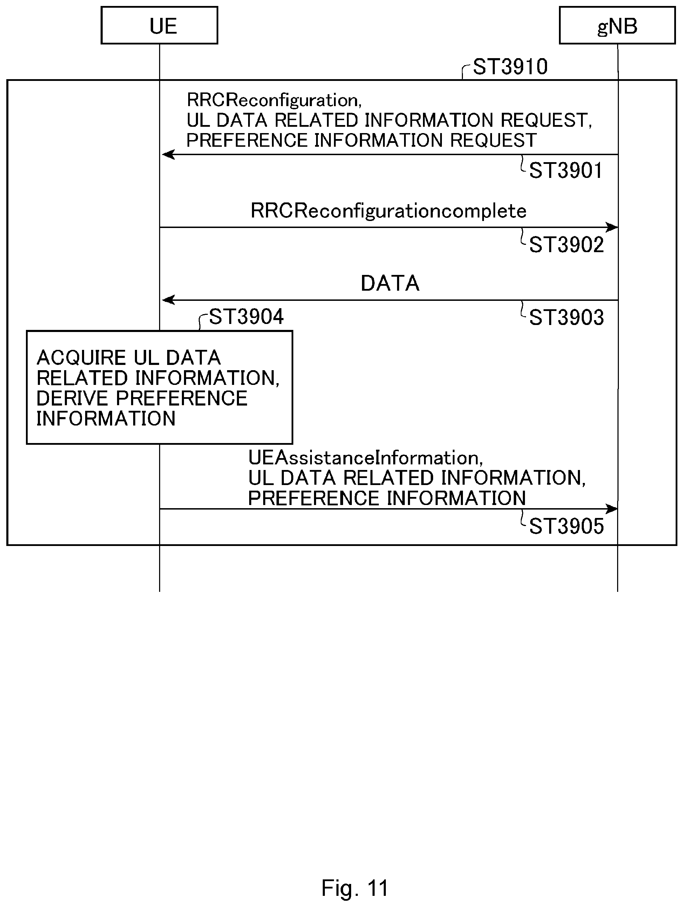

Fig. 11 is a diagram illustrating a sequence example of a method of transmitting the information on the UL data and the preference information on the configuration of the CG from the UE to the gNB. Each processing of Steps ST3901 to ST3905 included in Step ST3910 is performed between the gNB and the UE, and the information on the UL data and the preference information on the configuration of the CG are transmitted from the UE to the gNB. In other words, in Step ST3901, the gNB transmits the transmission request for the information on the UL data and the preference information on the configuration of the CG to the UE. It may be transmitted using an RRCReconfiguration message. Thus, the UE performs a configuration for acquiring the information on the UL data and a configuration for deriving the preference information on the configuration of the CG. In Step ST3902, the UE transmits an RRCReconfigurationcomplete message to the gNB. A notification of completion of the configuration requested in Step ST3901 may be transmitted. In Step ST3903, data communication is performed between the UE and the gNB. In Step ST3904, in the data communication, the UE acquires the information on the UL data and derives the preference information on the configuration of the CG. In Step ST3905, the UE transmits the acquired and derived information on the UL data and preference information on the configuration of the CG to the gNB on a regular or periodic basis or on a trigger basis. Whether or not the regular or periodic basis or the trigger basis is employed may be configured from the gNB in Step ST3901, for example, and the UE may perform transmission using a method in accordance with the configuration. In Fig. 11, RRC signaling is used for transmission of the information. It is transmitted using UEAssistanceInformation. In this manner, the gNB can acquire the information on the UL data and the preference information on the configuration of the CG from the UE. The gNB may configure the CG suited to communication and may perform scheduling suited to UL XR traffic, using the information on the UL data and the preference information on the configuration of the CG acquired from the UE. Thus, low latency characteristics can be enhanced, and communication quality can be enhanced.

Although Fig. 11 illustrates a case of transmitting both of the information on the UL data and the preference information on the configuration of the CG, only one of them may be transmitted.

The above discloses the method of transmitting the information on the UL data and the preference information on the configuration of the CG from the UE to the gNB. The information may be transmitted from the UE to a core network (CN). Alternatively, the information acquired from the UE may be transmitted from the gNB to the CN. A function of the CN may be the AMF, for example. The information on the UL data and the preference information on the configuration of the CG may be transmitted from the UE to the AMF, using NAS signaling. In this manner, the function of the CN or a node of the CN can use the information on the UL data and the preference information on the configuration of the CG.

The function of the CN or the node of the CN that has received the information on the UL data and the preference information on the configuration of the CG from the UE or from the gNB may notify a Network Data Analytic Function (NWDAF) of the information. The NWDAF can use the information. The NWDAF may perform communication control and NW operation, using the acquired information on the UL data and preference information on the configuration of the CG, for example. In this manner, communication control and NW operation suited to UL XR traffic can be performed, low latency characteristics can be enhanced, and communication quality can be enhanced.

The NWDAF may transmit analysis results derived using the information on the UL data and the preference information on the configuration of the CG received from the UE or from the gNB to the application. The application may request the analysis results from the NWDAF. In response to the request, the NWDAF may transmit the analysis results to the application. Although the above discloses transmission and reception between the NWDAF and the application, the analysis results and the request may be transmitted and received between the NWDAF and the application server (AS) or the application function (AF). The application may transmit and receive the analysis results and the request to and from the NWDAF via the AF or the AS. In this manner, the application can use the analysis results.

The function of the CN or the node of the CN that has received the information on the UL data and the preference information on the configuration of the CG from the UE may notify the gNB of the information. The gNB can use the information. As disclosed in the above, the gNB may configure the CG suited to communication, using the information on the UL data and the preference information on the configuration of the CG acquired from the UE. In this manner, scheduling suited to UL XR traffic can be performed, low latency characteristics can be enhanced, and communication quality can be enhanced.

The information may be transmitted from the UE to the application function (AF) or the application server (AS). The information acquired from the UE may be transmitted from the gNB to the AF or the AS. The gNB may transmit the information to the AF or the AS via the CN. In this manner, the AF or the AS and the application can use the information on the UL data and the preference information on the configuration of the CG.

The above discloses the method of transmitting the transmission request for the information from the gNB to the UE. The transmission request for the information may be transmitted from the CN to the UE. Alternatively, the transmission request for the information may be transmitted from the CN to the gNB. The gNB that has received the transmission request may perform the transmission request for the information to the UE. In this manner, the function of the CN or the node of the CN can perform the transmission request for the information on the UL data and the preference information on the configuration of the CG.

The transmission request for the information may be transmitted from the AF or the AS to the UE. The transmission request for the information may be transmitted from the AF or the AS to the gNB. The AF or the AS may transmit the transmission request for the information to the gNB via the CN. The gNB that has received the transmission request may perform the transmission request for the information to the UE. In this manner, the AF or the AS and the application can perform the transmission request for the information on the UL data and the preference information on the configuration of the CG.

The DL will be disclosed. The gNB may transmit information on DL data and preference information on a configuration of semi persistent scheduling (SPS) to the CN or the AF or the AS. The CN or the AF or the AS may transmit the transmission request for the information on the DL data and the preference information on the configuration of SPS to the gNB. In this manner, the AF or the AS and the application can perform the transmission request for the information on the UL data and the preference information on the configuration of the CG. In this manner, the CN or the CN node or the AF or the AS and the application can acquire the information on the DL data and the preference information on the configuration of SPS. The CN or the CN node or the AF or the AS and the application can perform the transmission request for the information on the DL data and the preference information on the configuration of SPS.

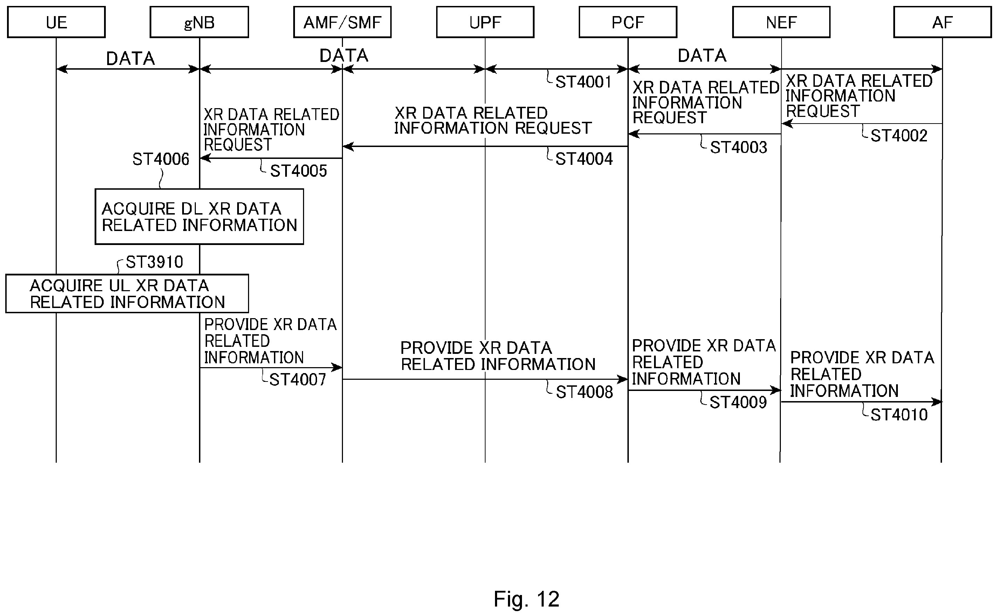

Fig. 12 is a diagram illustrating a sequence example of a method of transmitting the information on the UL data and the DL data from the gNB to the AF. In Fig. 12, the UL data and the DL data are collectively referred to as XR data. In Step ST4001, data is transmitted and received among the AF, the UPF, the gNB, and the UE. In Steps ST4002 to ST4005, the AF transmits a transmission request for information on the XR data (an XR data related information request) to the gNB via a Network Exposure Function (NEF), the PCF, and the AMF/SMF. In Step ST4006, the gNB that has received the transmission request for the information acquires the information on the DL data. The gNB that has received the transmission request for the information performs processing of Step ST3910 described in Fig. 11 to the UE, and acquires the information on the UL data from the UE. In Steps ST4007 to ST4010, the gNB that has acquired the information on the DL data and the information on the UL data transmits the information on the XR data to the AF via the AMF/SMF, the PCF, and the NEF. In this manner, the AF can acquire the information on the XR data from the gNB and the UE.

Although Fig. 12 discloses a case of transmitting both of the DL data and the UL data, only one of them may be transmitted. Although Fig. 12 discloses a case of transmitting the information on the XR data, the preference information on the configuration of the CG and/or SPS may be transmitted. A similar method may be applied as appropriate.

In this manner, the function of the CN or the node of the CN or the AF or the AS and the application can acquire the information on the DL data, the information on the UL data, the preference information on the configuration of SPS, the preference information on the configuration of the CG, and information of a combination of these.

Using the acquired information, the function of the CN or the node of the CN can perform modification of QoS and a QoS flow required for a service, modification of a stream, and modification of a resource configuration for communication, for example, modification of a network slicing configuration, modification of the UPF to be used, and the like. Thus, communication suited to XR traffic can be performed, and communication quality can be enhanced.

Using the acquired information, the AF or the AS and the application can perform modification of QoS required for a service and the like. In this manner, a service suited to XR traffic can be provided.

### Second Embodiment

A combination of a plurality of data units may be provided (the combination may be hereinafter referred to as a PDU set). The data of the PDU set may be discarded, with a trigger being a failure of communication of a part of the data in the PDU set. The discarding may be performed in the base station. The base station may discard the data of the PDU set before transmission.

However, even in a case in which the data of the PDU set is discarded in the base station, the data of the PDU set received in the UE remains without being discarded and the data thus remains in the UE, which presents a problem.

A second embodiment will disclose a method for solving the problem described above.

In the method, the UE is provided with a function of discarding data. The UE may discard the data of the PDU set. The UE may discard the data of the received PDU set.

Both of the base station and the UE may have a function of discarding data. Both of the base station and the UE may discard the data of the PDU set. The base station may discard PDU data before transmission. The UE may discard received PDU data.

An identifier of the PDU set may be provided. The identifier may be provided to discard the data of the PDU set. The base station may notify the UE of information on the discarded PDU set. The information may be the identifier of the discarded PDU set, for example. The UE receives the identifier of the discarded PDU set from the base station. The UE may discard the PDU data, using the identifier.

The base station may perform notification of the identifier, using a Realtime Transport Protocol (RTP) header. The RTP header may include information indicating the identifier of the PDU set. The UE may acquire information on the PDU set to be discarded, using the header. The UE may perform the acquisition operation in a PDCP layer or in an IP layer. For example, the PDCP layer of the UE may acquire the information from the RTP header included in a PDCP service data unit (SDU). The IP layer of the UE may acquire the information from the RTP header included in an IP payload.

As another example, the base station may perform notification of the identifier, using a GPRS Tunnelling Protocol (GTP) header. The GTP header may include information indicating the identifier of the PDU set. The base station may notify the UE of information on the RTP header associated with the GTP header, or may notify the UE of information on a PDCP SN associated with the GTP header. The information on the RTP header may include information on the first RTP data, may include information on the last RTP data, may include information on a range of the RTP data, or may include information on the number of RTP data units, for example. The information on the PDCP sequence number (SN) may include information on the first PDCP SN, may include information on the last PDCP SN, may include information on a range of the PDCP SN, or may include information on the number of PDCP SNs, for example.

Another solution will be disclosed. A timer used to discard the PDU set is provided. The base station notifies the UE of the timer. The UE starts the timer, with a trigger being reception of a first packet in the PDU set. The UE stops the timer, with a trigger being reception of all of the packets in the PDU set. The UE discards the data of the PDU set, with a trigger being expiration of the timer.

The UE may include the timer for each PDU set. Consequently, for example, even in a case in which data of a succeeding PDU set is received before a part of data of a preceding PDU set, control using the timer of the PDU set can be performed. As another example, the UE may include only one timer. For example, in a case in which data of a succeeding PDU set is received before a part of data of a preceding PDU set, the UE may start the timer for the succeeding PDU set in response to stop or expiration of the timer for the data of the preceding PDU set. Consequently, for example, complexity of control of the timer can be avoided.

The UE may use the common timer among a plurality of PDCP entities.
Consequently, for example, complexity of control in the communication system can be avoided. As another example, the UE may use the common timer among a plurality of RLC entities. Consequently, for example, effects similar to those in the above description can be achieved.

At the time of expiration of the timer, the UE may discard the data of the PDU set remaining in an L2 layer and/or an L1 layer. The L2 layer and/or the L1 layer described above may be the SDAP, may be the PDCP, may be the RLC, may be the MAC, may be the PHY, or may be two or more of the above, for example. Consequently, for example, complexity of control in the communication system can be avoided.

Another solution will be disclosed. The base station notifies the UE of a packet delay budget of the PDU set. The packet delay budget may be the packet delay budget of the PDU set in the downlink, for example. The base station may notify the UE of the notification, using RRC signaling, for example, RRC reconfiguration (RRCReconfiguration).

As another example, a core NW apparatus may notify the UE of the packet delay budget of the PDU set. The core NW apparatus may be the PCF, for example. For example, the PCF may notify the UE of the packet delay budget. The PCF may notify the UE of the packet delay budget in UE registration processing, may notify the UE of the packet delay budget in PDU session establishment processing, or may notify the UE of the packet delay budget in QoS policy configuration processing, for example. The core NW apparatus may be Unified Data Management (UDM), for example. For example, the UDM may notify the UE of the packet delay budget. The UDM may notify the UE of the packet delay budget in UE registration processing, may notify the UE of the packet delay budget in PDU session establishment processing, or may notify the UE of the packet delay budget in QoS policy configuration processing, for example.

The UE may discard the data of the PDU set, with a trigger being a failure of reception of all of the data of the PDU set within the packet delay budget since reception of first data in the PDU set.

An offset may be provided in the packet delay budget of the PDU set. For example, a time necessary for communication from the base station to the UE may be provided as the offset. In the above-described processing in the UE, a value obtained by adding the offset to the packet delay budget may be used in place of the packet delay budget. Consequently, for example, even in a case in which a large amount of time is required for communication from the base station to the UE, unnecessary discarding of the data of the PDU set can be prevented.

A timestamp may be assigned to packet data. The UE may use the timestamp for counting the packet delay budget. As another example, the UE may use an RTP timestamp for counting the packet delay budget. Consequently, for example, complexity of control using the packet delay budget can be avoided in the UE. The timestamp described above may be assigned only to a first packet of the PDU set. Consequently, for example, a packet size can be reduced.

The method used in the second embodiment may be used in uplink data. For example, the UE may discard the data of the PDU set in the course of transmission, and the base station may discard the data of the PDU set in the course of reception. The UE may notify the base station of information on the PDU set. The information may be the identifier of the PDU set, may be the timer of the PDU set, or may be the packet delay budget of the PDU set, for example. Consequently, for example, effects similar to those in the downlink can be achieved.

Whether to discard the data of the PDU set may be configurable. The base station may notify the UE of information indicating whether to perform discarding. The UE may or may not discard the data of the PDU set, using the information. Consequently, for example, flexibility in the communication system can be enhanced.

The method used in the second embodiment may be used in uplink data. For example, the UE may discard the data of the PDU set in the course of transmission, and the base station may discard the data of the PDU set in the course of reception. The UE may notify the base station of information on the PDU set. The information may be the identifier of the PDU set, may be the timer of the PDU set, or may be the packet delay budget of the PDU set, for example. Consequently, for example, effects similar to those in the downlink can be achieved.

According to the second embodiment, the data of the PDU set can be prevented from remaining in the UE, and as a result, a buffer overflow in the UE can be avoided and malfunction of the UE can be reduced. The buffer amount of the UE can be reduced.

### Third Embodiment

The UE notifies the base station of information on the discarded PDU set. The information on the PDU set may include information on the number of discarded PDU sets, for example. The information on the number may be the number of discarded PDU sets in a predetermined time, may be the number of discarded PDU sets out of a predetermined number of PDU sets, may be in a unit of a group of pictures (GOP), may be present for each video frame, may be present for each video stream, or may be present for each QoS flow, for example. Information on a ratio of discarded PDU sets may be included.

As another example, the information on the PDU set may include information on the number of discarded data units. The information on the number of discarded data units may be the number of data units in the PDU set, may be the ratio of discarded data, or may be information similar to the information on the number of PDU sets described above.

As another example, the information on the PDU set may be a statistical value.

The information on the PDU set may be information on the downlink, may be information on the uplink, or may be information on both of the downlink/uplink.

The UE may acquire the information on the discarded PDU set. As another example, the base station may acquire the information. For example, the CU of the base station may perform the acquisition, the DU may perform the acquisition, or the TRP may perform the acquisition. As another example, the core NW apparatus may acquire the information.

As a method for the UE to transmit the information on the discarded PDU set to the base station, the method of transmitting the information on the UL data from the UE to the base station disclosed in the first embodiment may be applied as appropriate.

The base station may perform control of a radio network, using the notified information. For example, it may be used to control radio resource allocation and a modulation and coding scheme (MCS) for the UE, or control of SPS and/or the CG may be performed.

The base station may request the UE to transmit the information on the discarded PDU set. As the method, the method of requesting the information on the UL data from the UE to the base station disclosed in the first embodiment may be applied as appropriate.

The above discloses the method of transmitting the information on the discarded PDU set from the UE to the gNB. The information may be transmitted from the UE to the CN. Alternatively, the information acquired from the UE may be transmitted from the gNB to the CN. As these methods, the method of transmitting the information on the UL data from the UE to the CN or from the gNB to the CN disclosed in the first embodiment may be applied as appropriate.

The function of the CN or the node of the CN that has received the information on the discarded PDU set from the UE or from the gNB may notify the NWDAF of the information. The NWDAF can use the information. The NWDAF may perform communication control and NW operation, using the acquired information on the discarded PDU set, for example. For example, QoS control may be performed or priority control of the PDU set may be performed, using the notified information. In this manner, for example, communication control and NW operation suited to services such as XR can be performed, low latency characteristics can be enhanced, and communication quality can be enhanced.

The NWDAF may transmit analysis results derived using the information on the discarded PDU set received from the UE or from the gNB to the application. The application may request the analysis results from the NWDAF. In response to the request, the NWDAF may transmit the analysis results to the application. Although the above discloses transmission and reception between the NWDAF and the application, the analysis results and the request may be transmitted and received between the NWDAF and the application server (AS) or the application function (AF). The application may transmit and receive the analysis results and the request to and from the NWDAF via the AF or the AS. In this manner, the application can use the analysis results.

The function of the CN or the node of the CN that has received the information on the discarded PDU set from the UE may notify the gNB of the information. The gNB can use the information. As disclosed in the above, using the information on the discarded PDU set acquired from the UE, for example, the gNB can perform scheduling suited to services such as XR, and can enhance low latency characteristics and enhance communication quality.

The information may be transmitted from the UE to the application function (AF) or the application server (AS). The information acquired from the UE may be transmitted from the gNB to the AF or the AS. The gNB may transmit the information to the AF or the AS via the CN. In this manner, the AF or the AS can use the information on the discarded PDU set, owing to the application.

The above discloses the method of transmitting the transmission request for the information from the gNB to the UE. The transmission request for the information may be transmitted from the CN to the UE. Alternatively, the transmission request for the information may be transmitted from the CN to the gNB. The gNB that has received the transmission request may perform the transmission request for the information to the UE. In this manner, the function of the CN or the node of the CN can perform the transmission request for the information on the discarded PDU set.

The transmission request for the information may be transmitted from the AF or the AS to the UE. The transmission request for the information may be transmitted from the AF or the AS to the gNB. The AF or the AS may transmit the transmission request for the information to the gNB via the CN. The gNB that has received the transmission request may perform the transmission request for the information to the UE. In this manner, the AF or the AS and the application can perform the transmission request for the information on the discarded PDU set.

According to a third embodiment, for example, control of the communication system suited to services such as XR can be performed.

### Fourth Embodiment

In a case of occurrence of mobility in the UE, downlink data is transferred from a movement-source base station to a movement-destination base station. Thus, data may be transferred from an intermediate packet in the PDU set. However, the movement-destination base station does not recognize a timing at which the movement-source base station transmits first data in the PDU set. Alternatively, the movement-destination base station does not recognize a timing at which the movement-source base station receives first data in the PDU set from the UPF. Thus, the movement-destination base station cannot determine whether all of the data of the PDU set is transmitted within the packet delay budget, and as a result, for example, the movement-destination base station cannot perform priority control, scheduling control, and/or data discard control, which presents a problem.

A fourth embodiment will disclose a method for solving the problem described above.

In other words, in the method illustrated in the fourth embodiment, the movement-source base station notifies the movement-destination base station of information on a transmission timing of the first data in the PDU set, which includes data to be transferred. The movement-source base station may notify the movement-destination base station of information on a timing at which the first data in the PDU set is received from the UPF. The method described above may be applied to downlink communication, for example.

Information on the first data in the PDU set may be provided. The movement-source base station may use Xn signaling as a method of notifying the movement-destination base station of the information. The information may be included in signaling of SN STATUS TRANSFER, or may be included in signaling of EARLY STATUS TRANSFER, for example.

The movement-source base station may use a user plane protocol used in NG-RAN as a method of notifying the movement-destination base station of the information. The information can be processed as user plane data.

The method described above may be applied to uplink communication. For example, the movement-source base station notifies the movement-destination base station of information on a reception timing of the first data in the PDU set.

According to the fourth embodiment, the movement-destination base station can determine whether all of the data of the PDU set is transmitted within the packet delay budget, and as a result, for example, the movement-destination base station can perform priority control, scheduling control, and/or data discard control.

Although the above discloses the case of occurrence of mobility in the UE, it may also be applied to dual connecivity (DC) as appropriate. For example, it may be applied to SCG addition processing as appropriate. It may be applied to transition processing from an MN terminated bearer to an SN terminated bearer or from an SN terminated bearer to an MN terminated bearer as appropriate. In DC as well, the base station can perform priority control, scheduling control, and/or data discard control.

### Fifth Embodiment

A priority may be provided to the PDU set. Scheduling may be performed using the priority provided to the PDU set.

For example, in SPS, in a case in which transmission timings of a part of data of a plurality of PDU sets collide, the base station may transmit the data of the PDU set having a high priority.

As another example, in the CG, in a case in which transmission timings of a part of data of a plurality of PDU sets collide, the UE may transmit the data of the PDU set having a high priority.

For example, in a case of discarding the PDU set with the packet delay budget being exceeded due to a failure of transmission of a part of data of the PDU set, it is useless to prioritize other data of the PDU set. In order to solve such a problem, priority may be performed for each PDU set. For example, instead of performing preferential scheduling of other data in the PDU set to be discarded or the like, control of preferential scheduling of other PDU sets or the like may be performed. In this manner, resources to be allocated to other data of the PDU set can be allocated to data of other PDU sets.

By performing priority control for each PDU set as described above, efficient priority control can be performed. Use efficiency of radio resources can be enhanced.

In the present disclosure, although there is a description of the gNB or the cell, it may be the gNB or may be the cell, unless otherwise specifically noted.

In the present disclosure, the gNB may be the MCG or the SCG.

The embodiments and their alterations described above are merely illustrative, and the embodiments and their alterations can be freely combined. Any component in the embodiments and their alterations can be modified or omitted as appropriate.

For example, in the embodiments and their alterations described above, a slot is an example of a time unit of communication in the fifth generation communication system. The slot may be a scheduling unit. In the embodiments and their alterations described above, processing described to be performed in a slot unit may be performed in a TTI unit, a subframe unit, a sub-slot unit, or a mini-slot unit.

For example, the methods disclosed in the embodiments and their alterations described above may be applied to the IAB. They may be applied to communication between the IAB donor and the IAB node. They may be applied to processing using Uu in the IAB.

For example, the methods disclosed in the embodiments and their alterations described above may be applied to SL communication. For example, they may be applied to communication between the UE and the NW via relay. They may be applied to communication between the UE and the NW via L2 relay.

For example, the methods disclosed in the embodiments and their alterations described above may be applied not only to a vehicle-to-everything (V2X) service but also to services using SL communication. For example, they may be applied to SL communication used in various services, such as a proximity-based service, public safety, inter-wearable terminal communication, and inter-device communication in a factory.

Various aspects of the present disclosure are summarized below as supplementary notes.

### (Supplementary Note 1)

A communication system including:
a base station apparatus connected to a core network that is compatible with a fifth generation radio access system and is capable of providing an XR service; and
a communication terminal connected to the base station apparatus, wherein
in a case in which the communication terminal uses the XR service via the base station apparatus, the communication terminal is configured to notify the base station apparatus of information on a characteristic of uplink data to be transmitted to the base station apparatus in communication for using the XR service.

### (Supplementary Note 2)

The communication system according to Supplementary Note 1, wherein
the base station apparatus is configured to perform scheduling of transmission of the uplink data to be performed by the communication terminal, based on the information on the uplink data acquired from the communication terminal.

### (Supplementary Note 3)

The communication system according to Supplementary Note 1 or 2, wherein
the communication system is configured to be capable of performing transmission processing using a data set, the data set being a combination of a plurality of data units in a determined unit, and
in a case in which at least one of the base station apparatus and the communication terminal fails to transmit at least one data unit included in the data set, the at least one of the base station apparatus and the communication terminal is configured to discard, from a transmission buffer, the data failing to be transmitted, and other data in the data set including the data failing to be transmitted.

### (Supplementary Note 4)

The communication system according to Supplementary Note 3, wherein
in a case in which at least one of the base station apparatus and the communication terminal fails to receive at least one data unit included in the data set, the at least one of the base station apparatus and the communication terminal is configured to discard, from a reception buffer, data included in an identical data set with the data failing to be received out of received data.

### (Supplementary Note 5)

The communication system according to Supplementary Note 3 or 4, wherein
in a case in which the data is discarded from the transmission buffer due to the failure of the transmission of the data, and in a case in which the data is discarded from the reception buffer due to the failure of the reception of the data, the communication terminal is configured to notify the base station apparatus of information on the data set including the discarded data.

### (Supplementary Note 6)

The communication system according to any one of Supplementary Notes 3 to 5, wherein
the base station apparatus includes a plurality of base stations, and
in a case in which the communication terminal connected to a first base station being one of the plurality of base stations switches a connection destination to a second base station being one of the plurality of base stations and different from the first base station,
   the first base station is configured to start to transfer data addressed to the communication terminal to switch the connection destination to the second base station, and the first base station is configured to, in a case in which the data to be transferred to the second base station includes data included in an identical data set with data already transmitted to the communication terminal to switch the connection destination, notify the second base station of information on a transmission timing of first data included in an identical data set with the data to be transferred to the second base station.

### (Supplementary Note 7)

The communication system according to any one of Supplementary Notes 3 to 6, wherein
the data set is configured with a priority, and
the base station apparatus is configured to perform scheduling of data transmission to the communication terminal, based on the priority.

### Reference Signs List

202 Communication terminal apparatus (mobile terminal),
210 Communication system,
213, 240-1, 240-2, 750 Base station apparatus (NR base station, base station),
214 5G core unit,
215 Central unit,
216 Distributed unit,
217 Control-plane central unit,
218 User-plane central unit,
219 TRP,
301, 403 Protocol processing unit,
302 Application unit,
304, 405 Encoder unit,
305, 406 Modulating unit,
306, 407 Frequency converting unit,
307-1 to 307-4, 408-1 to 408-4 Antenna,
308, 409 Demodulating unit,
309, 410 Decoder unit,
310, 411, 526 Control unit,
401 EPC communication unit,
402 Other base station communication unit,
412 5GC communication unit,
521 Data network communication unit,
522 Base station communication unit,
523 User plane communication unit,
523-1 PDU processing unit,
523-2 Mobility anchoring unit,
525 Control plane control unit,
525-1 NAS security unit,
525-2 Idle state mobility management unit,
527 Session management unit,
527-1 PDU session control unit,
527-2 UE IP address assigning unit,
751-1 to 751-8 Beam,
752 Cell.

## Claims

1. A communication system comprising:
a base station apparatus connected to a core network that is compatible with a fifth generation radio access system and is capable of providing an XR service; and
a communication terminal connected to the base station apparatus, wherein
in a case in which the communication terminal uses the XR service via the base station apparatus, the communication terminal is configured to notify the base station apparatus of information on a characteristic of uplink data to be transmitted to the base station apparatus in communication for using the XR service.

2. The communication system according to claim 1, wherein
the base station apparatus is configured to perform scheduling of transmission of the uplink data to be performed by the communication terminal, based on the information on the uplink data acquired from the communication terminal.

3. The communication system according to claim 1, wherein
the communication system is configured to be capable of performing transmission processing using a data set, the data set being a combination of a plurality of data units in a determined unit, and
in a case in which at least one of the base station apparatus and the communication terminal fails to transmit at least one data unit included in the data set, the at least one of the base station apparatus and the communication terminal is configured to discard, from a transmission buffer, the data failing to be transmitted, and other data in the data set including the data failing to be transmitted.

4. The communication system according to claim 3, wherein
in a case in which at least one of the base station apparatus and the communication terminal fails to receive at least one data unit included in the data set, the at least one of the base station apparatus and the communication terminal is configured to discard, from a reception buffer, data included in an identical data set with the data failing to be received out of received data.

5. The communication system according to claim 3 or 4, wherein
in a case in which the data is discarded from the transmission buffer due to the failure of the transmission of the data, and in a case in which the data is discarded from the reception buffer due to the failure of the reception of the data, the communication terminal is configured to notify the base station apparatus of information on the data set including the discarded data.

6. The communication system according to claim 3, wherein
the base station apparatus includes a plurality of base stations, and
in a case in which the communication terminal connected to a first base station being one of the plurality of base stations switches a connection destination to a second base station being one of the plurality of base stations and different from the first base station,
the first base station is configured to start to transfer data addressed to the communication terminal to switch the connection destination to the second base station, and the first base station is configured to, in a case in which the data to be transferred to the second base station includes data included in an identical data set with data already transmitted to the communication terminal to switch the connection destination, notify the second base station of information on a transmission timing of first data included in an identical data set with the data to be transferred to the second base station.

7. The communication system according to claim 3, wherein
the data set is configured with a priority, and
the base station apparatus is configured to perform scheduling of data transmission to the communication terminal, based on the priority.
